# EUROPEAN PATENT APPLICATION

(11) **EP 4 310 645 A1**
(43) Date of publication of application: **24.01.2024**
(21) Application number: 21936835.4
(22) Date of filing: 27.12.2021
(51) Int. Cl.: G06F 3/0481

(54) **METHOD AND APPARATUS FOR ENABLING FUNCTION IN APPLICATION**

(30) Priority: 16.04.2021 CN 202110413236
(71) Applicant: Huawei Technologies Co., Ltd., Shenzhen, Guangdong 518129 (CN)
(72) Inventor: CHEN, Meixing, Shenzhen, Guangdong 518129 (CN); LIU, Feng, Shenzhen, Guangdong 518129 (CN)
(74) Representative: Pfenning, Meinig & Partner mbB
(86) International application number: PCT/CN2021/141504
(87) International publication number: WO 2022/217969

(57) **Abstract**

A method for enabling a function in an application and an apparatus are provided to reduce a quantity of user operations when a function is enabled in an application. In this application, a first operation is received, where the first operation is that a user drags a first icon and/or a second icon in a first interface until a position relationship between the first icon and the second icon meets a preset condition; and a second interface corresponding to a target function indicated by the second icon is displayed in response to the first operation, where a first contact corresponding to the first icon is an operation object of the target function.

## Description

### CROSS-REFERENCE TO RELATED APPLICATIONS

This application claims priority to Chinese Patent Application No. 202110413236.8, filed with the China National Intellectual Property Administration on April 16, 2021 and entitled "METHOD FOR ENABLING FUNCTION IN APPLICATION AND APPARATUS", which is incorporated herein by reference in its entirety.

### TECHNICAL FIELD

This application relates to the field of computers, and in particular, to a method for enabling a function in an application and an apparatus.

### BACKGROUND

Applications have become a part of work and life of people. People can use a same application to perform many different functions, such as making a call, sending an email, and sending a message.

In a current application, different functions correspond to different interfaces. When using different functions, a user needs to touch a response area corresponding to a function in a main interface of the application, so that an interface corresponding to the function is displayed in the application. After entering the interface corresponding to the function, the user may perform an operation corresponding to the function in the interface.

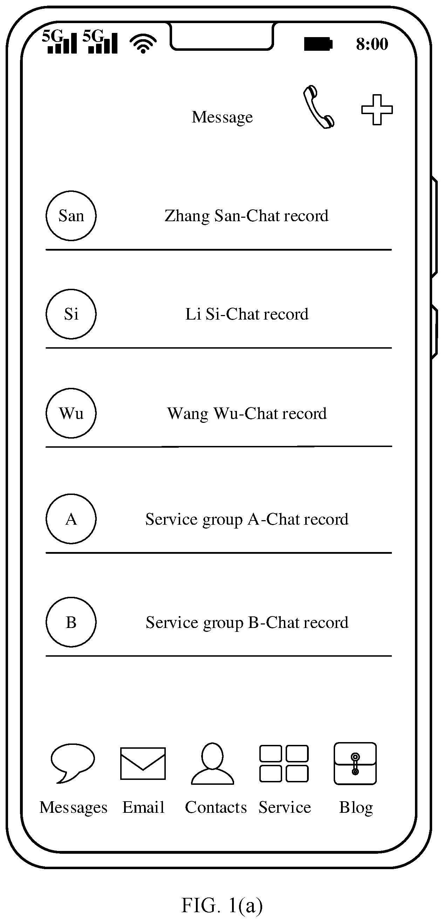

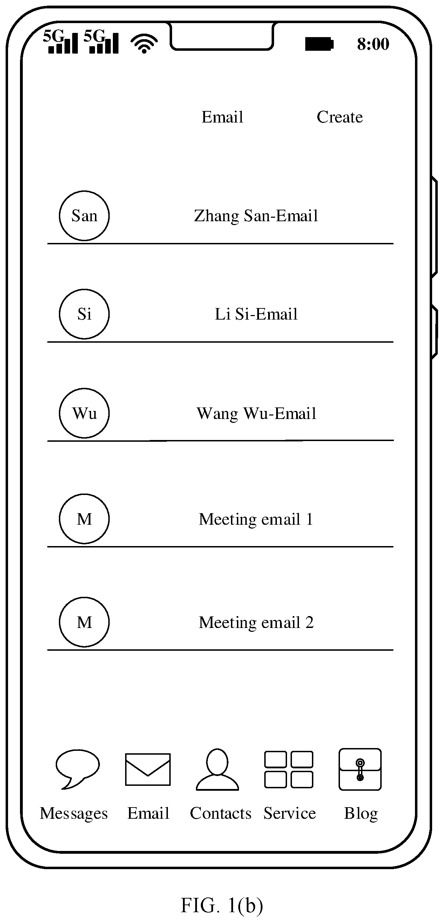

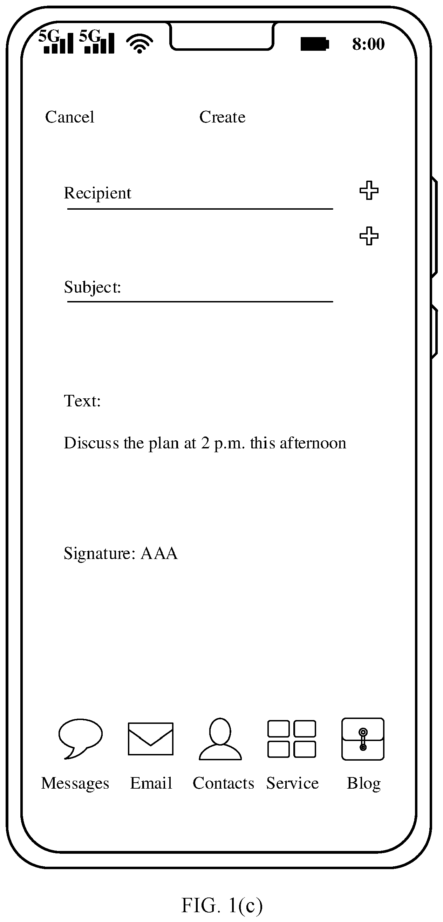

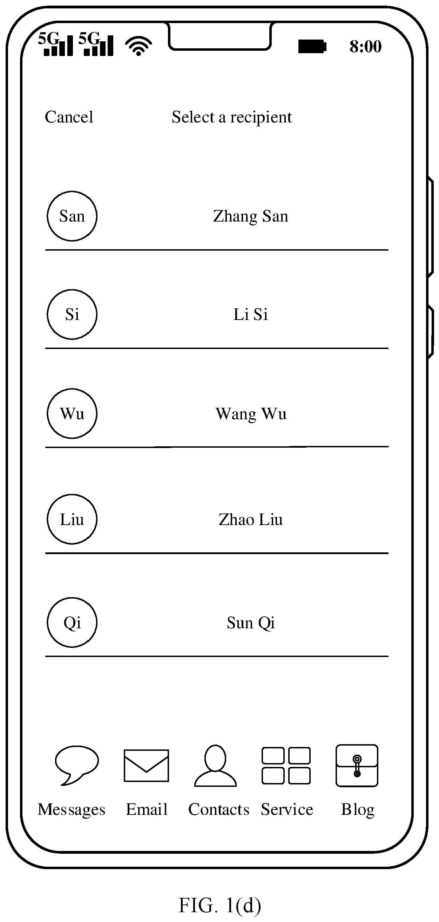

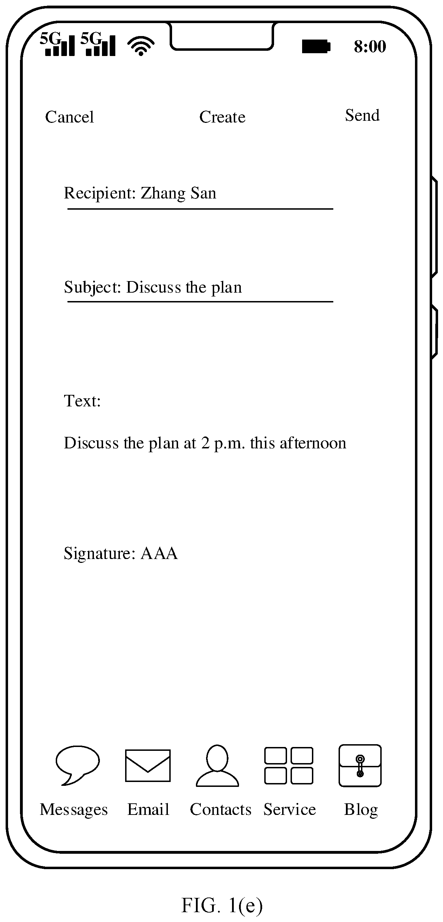

FIG. 1(a) to FIG. 1(e) are a schematic diagram of displaying a group of interfaces for sending an email by using an application (instant messaging) in the conventional technology. As shown in FIG. 1(a), a main interface of the application includes response areas corresponding to a plurality of functions, for example, a response area corresponding to an email function. When the user needs to send an email, the user needs to touch the response area corresponding to the email function in the main interface, and the application is switched from the main interface to an Email interface in FIG. 1(b). Then, the user touches a Create button in the Email interface, to enter a Create interface in FIG. 1(c). The user may write email content in the Create interface, and touch a button for selecting a recipient (for example, a plus sign in FIG. 1(c)) to enter a recipient selection interface, where the recipient selection interface is shown in FIG. 1(d). For example, if the user selects Zhang San as a recipient, an electronic device displays Zhang San in a position of the recipient in the Create interface, as shown in FIG. 1(e). Then, the user touches a Send button, and sends the email to Zhang San.

In this way, when the user uses the function in the application, the operation is complex, and the user needs to perform a plurality of touch operations to complete the operation.

### SUMMARY

This application provides a method for enabling a function in an application and an apparatus, to reduce a quantity of user operations when a function is enabled in an application.

According to a first aspect, this application provides a method for enabling a function in an application, which can be applied to an electronic device. The method includes: receiving a first operation, where the first operation is that a user drags a first icon and/or a second icon in a first interface until a position relationship between the first icon and the second icon meets a preset condition; and displaying, in response to the first operation, a second interface corresponding to a target function indicated by the second icon, where a first contact corresponding to the first icon is an operation object of the target function. In the foregoing technical solution, the user may drag the first icon and/or the second icon until the position relationship between the first icon and/or the second icon meets the preset condition, so that when the electronic device executes the target function on the first contact (that is, a target contact) corresponding to the first icon, the user does not need to touch the interface for a plurality of times or switch between different interfaces for a plurality of times, which helps reduce user operations. In addition, a visual element and an information architecture on the application interface are not changed, which helps reduce development costs.

In a possible implementation, the first interface and the second interface belong to a same application or different applications. In the foregoing technical solution, the user may start different interfaces in a same application or start different interfaces in different applications by dragging the first icon and/or the second icon until the position relationship between the first icon and/or the second icon meets the preset condition, which helps simplify the user operations while a plurality of functions are provided.

In a possible implementation, the first icon includes a plurality of icons. In the foregoing technical solution, the plurality of icons may correspond to a plurality of target contacts, that is, the electronic device may execute a target function on the plurality of target contacts at the same time, which helps simplify the user operations.

In a possible implementation, that a position relationship between the first icon and the second icon meets a preset condition includes: the first icon and the second icon overlap, or a distance between the first icon and the second icon is less than a preset distance. In the foregoing technical solution, when detecting that the first icon and the second icon overlap or the distance between the first icon and the second icon is less than the preset distance, the electronic device executes the target function on the target contact, which helps reduce misoperations of the user.

In a possible implementation, before the receiving a first operation, the method further includes: receiving a second operation, where the second operation is that the user touches a first response area corresponding to the first contact in the first interface for first preset duration; and generating, in response to the second operation, the first icon in a touch position of the second operation. In the foregoing technical solution, when it is detected that a finger of the user touches the first response area corresponding to the first contact in the first interface for the first preset duration, a movable first icon may be displayed in the first interface. For example, the first icon is in a floating state. Then, the user may drag the moved first icon until the position relationship between the moved first icon and the second icon meets the preset condition.

In a possible implementation, after the receiving a second operation, the method further includes: highlighting a plurality of selectable function icons, where the plurality of selectable function icons include the second icon. In the foregoing technical solution, not only the movable first icon may be displayed in the first interface, but also the plurality of selectable function icons may be highlighted in the first interface, so as to prompt the user that which functions corresponding to the function icons are available, thereby helping prevent the user from dragging the first icon to a place that is close to an unselectable function icon.

In a possible implementation, before the receiving a first operation, the method further includes: receiving a second operation, where the second operation is that the user touches a response area corresponding to a target function in the first interface for second preset duration; and generating, in response to the second operation, the second icon in a touch position of the second operation. In the foregoing technical solution, when it is detected that the finger of the user touches the response area corresponding to the target function in the first interface for the second preset duration, a movable second icon may be displayed in the first interface. For example, the second icon is in a floating state. Then, the user may drag the moved second icon until the position relationship between the moved second icon and the first icon meets the preset condition.

In a possible implementation, after the receiving a second operation, the method further includes: highlighting a plurality of selectable contact icons, where the plurality of selectable contact icons include the first icon. In the foregoing technical solution, not only the movable second icon may be displayed in the first interface, but also the plurality of selectable contact icons may be highlighted in the first interface, so as to prompt the user which contacts corresponding to the contact icons can be used as the target contacts, thereby helping prevent the user from dragging the second icon to a place that is close to an unselectable contact icon.

In a possible implementation, the second icon includes any one of a Contacts icon, a Phone icon, an Email icon, a Messages icon, and a Blog icon. In the foregoing technical solution, the electronic device may display, in the first interface, a function icon corresponding to each function, for example, the Contacts icon, the Phone icon, the Email icon, the Messages icon, or the Blog icon. The second icon may be one of the foregoing function icons. When the finger of the user drags the first icon and/or the second icon until the position relationship between the first icon and/or the second icon meets the preset condition, the electronic device jumps from the first interface to the second interface corresponding to the target function. In this manner, more operation functions can be provided for the user while reducing user operations.

In a possible implementation, the first contact is a contact group, and the contact group includes a plurality of contacts. In the foregoing technical solution, the user may execute an operation of a target function on the plurality of contacts in the contact group, which helps improve convenience of the user operations.

In a possible implementation, the method further includes: returning to the first interface from the second interface after the target function is executed on the first contact. In the foregoing technical solution, after the electronic device determines that the user executes the target function performed on the target contact, the electronic device jumps from the current second interface to the first interface, and the user does not need to touch a return button, thereby further reducing user operations and helping improve user experience.

According to a second aspect, this application provides an electronic device, including a processor, a memory, and a touchscreen, where the memory and the touchscreen is coupled to the processor, the memory is configured to store computer program code, the computer program code includes computer instructions, and when the processor reads the computer instructions from the memory, the electronic device performs the following operation: receiving a first operation, where the first operation is that a user drags a first icon and/or a second icon in a first interface until a position relationship between the first icon and the second icon meets a preset condition; and displaying, in response to the first operation, a second interface corresponding to a target function indicated by the second icon, where a first contact corresponding to the first icon is an operation object of the target function.

In a possible implementation, the first icon includes a plurality of icons.

In a possible implementation, that a position relationship between the first icon and the second icon meets a preset condition includes: the first icon and the second icon overlap, or a distance between the first icon and the second icon is less than a preset distance.

In a possible implementation, before receiving the first operation, the electronic device is further configured to: receive a second operation, where the second operation is that the user touches a first response area corresponding to the first contact in the first interface for first preset duration; and generate, in response to the second operation, the first icon in a touch position of the second operation.

In a possible implementation, after receiving the second operation, the electronic device is further configured to: highlight a plurality of selectable function icons, where the plurality of selectable function icons include the second icon.

In a possible implementation, the second icon includes any one of a Contacts icon, a Phone icon, an Email icon, a Messages icon, and a Blog icon.

In a possible implementation, the first contact is a contact group, and the contact group includes a plurality of contacts.

In a possible implementation, after executing the target function on the first contact, the electronic device is further configured to: return to the first interface from the second interface.

According to a third aspect, this application provides a computing device. The computing device has a function of implementing any one of the first aspect or the possible implementations of the first aspect. The function may be implemented by hardware, or may be implemented by hardware by executing corresponding software. The hardware or the software includes one or more units or modules corresponding to the foregoing function.

According to a fourth aspect, this application provides a computer-readable storage medium, where the computer-readable storage medium stores a computer program, the computer program includes program instructions, and when the program instructions are executed by a computer, the computer is enabled to perform the method in any one of the first aspect or the possible implementations of the first aspect.

According to a fifth aspect, this application provides a computer program product, where the computer program product stores a computer program, the computer program includes program instructions, and when the program instructions are executed by a computer, the computer is enabled to perform the method in any one of the first aspect or the possible implementations of the first aspect.

According to a sixth aspect, this application provides a chip system, including one or more processors, and when the one or more processors execute instructions, the one or more processors perform the method in any one of the first aspect or the possible implementations of the first aspect.

For technical effects that can be achieved in any one of the second aspect to the sixth aspect, refer to descriptions of beneficial effects in the first aspect. Details are not described herein again.

### BRIEF DESCRIPTION OF DRAWINGS

FIG. 1(a) to FIG. 1(e) are a schematic diagram of displaying a group of interfaces for sending an email by using an application in the conventional technology;
FIG. 2 is a schematic diagram of a hardware structure of an electronic device according to this application;
FIG. 3(a) to FIG. 3(c) are a schematic diagram of a group of main interfaces according to an example of this application;
FIG. 4(a) to FIG. 4(f) are a schematic diagram of displaying a first group of interfaces for sending an email by a user according to an example of this application;
FIG. 5(a) to FIG. 5(c) are a schematic diagram of displaying a second group of interfaces for sending an email by a user according to an example of this application;
FIG. 6(a) to FIG. 6(c) are a schematic diagram of displaying a third group of interfaces for sending an email by a user according to an example of this application;
FIG. 7(a) to FIG. 7(c) are a schematic diagram of displaying a group of interfaces for calling a contact by a user according to an example of this application;
FIG. 8(a) to FIG. 8(c) are a schematic diagram of displaying a group of interfaces for viewing a blog of a contact by a user according to an example of this application;
FIG. 9(a) to FIG. 9(f) are a schematic diagram of displaying a group of interfaces for sending an email to a plurality of contacts by a user according to an example of this application;
FIG. 10(a) to FIG. 10(c) are a schematic diagram of a group of interfaces highlighting a selectable function according to this application;
FIG. 11 is a schematic flowchart of a method for enabling a function in an application according to this application; and
FIG. 12 is a schematic diagram of a structure of an electronic device according to this application.

### DESCRIPTION OF EMBODIMENTS

The following describes technical solutions in this application with reference to the accompanying drawings in this application. In the descriptions of this application, the terms "first" and "second" below are merely intended for a purpose of description, and shall not be understood as an indication or implication of relative importance or an implicit indication of a quantity of indicated technical features. Therefore, a feature defined by "first" or "second" can explicitly or implicitly includes one or more features.

Embodiments disclosed in this application may be applied to an electronic device provided with a touchscreen. In some embodiments of this application, the electronic device may be a portable electronic device including functions such as a personal digital assistant and/or a music player, such as a mobile phone, a tablet computer, a wearable device (such as a smartwatch) having a wireless communication function, or a vehicle-mounted device. An example of an embodiment of the portable electronic device includes but is not limited to a portable electronic device using iOS^{®}, Android^{®}, Microsoft^{®}, or another operating system. Alternatively, the portable electronic device may be a laptop (laptop) computer having a touch-sensitive surface (for example, a touch panel). It should be further understood that in some other embodiments of this application, the electronic device may also be a desktop computer having a touch-sensitive surface (for example, a touch panel).

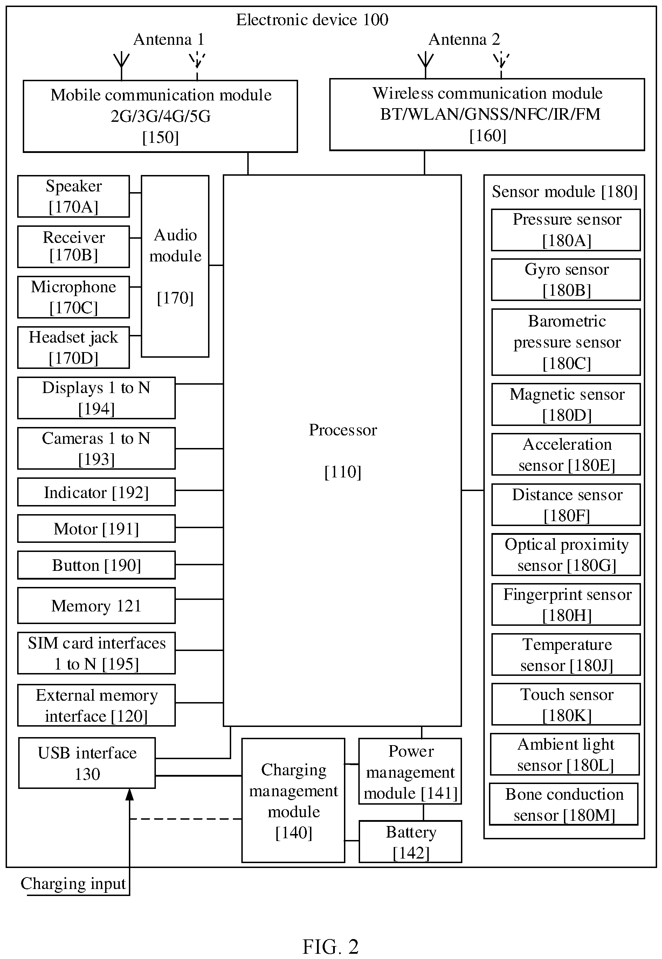

FIG. 2 is a schematic diagram of a structure of an electronic device 100 according to an example of this application.

It should be understood that the electronic device 100 shown in the figure is merely an example, and the electronic device 100 may have more or fewer components than those shown in the figure, may combine two or more components, or may have different component configurations. The components shown in the figure may be implemented in hardware, software, or a combination of hardware and software that includes one or more signal processing and/or application-specific integrated circuits.

As shown in FIG. 2, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The following specifically describes the components of the electronic device 100 with reference to FIG. 2.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on an instruction operation code and a timing signal, and implement control on instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the instructions or the data may be directly invoked from the memory, so that repeated access can be avoided, and a waiting time of the processor 110 can be reduced, thereby improving system efficiency.

The processor 110 may run the method for enabling a function in an application provided in this application, and the processor may enable, in the application in response to a touch operation on the display, a function corresponding to the touch operation. When different components are integrated into the processor 110, for example, a CPU and a GPU are integrated, the CPU and the GPU may cooperate to perform the method for enabling a function in an application provided in this application, to obtain relatively fast processing efficiency.

In some embodiments, the processor 110 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be coupled to the touch sensor 180K, a charger, a flash light, the camera 193, and the like by using different I2C bus interfaces. For example, the processor 110 may be coupled to the touch sensor 180K by using the I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transfer an audio signal to the wireless communication module 160 by using the I2S interface, to implement a function of answering a call by using a Bluetooth headset.

The PCM interface may further be used for audio communication, and sampling, quantization, and encoding of an analog signal. In some embodiments, the audio module 170 may be coupled to the wireless communication module 160 by using the PCM bus interface. In some embodiments, the audio module 170 may alternatively transfer an audio signal to the wireless communication module 160 by using the PCM interface, to implement the function of answering a call by using a Bluetooth headset. Both the I2S interface and the PCM interface may be used for audio communication.

The UART interface is a universal serial data bus used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using a UART interface, to implement a Bluetooth function. In some embodiments, the audio module 170 may transfer an audio signal to the wireless communication module 160 by using a UART interface, to implement a function of playing music by using a Bluetooth headset.

The MIPI interface may be configured to connect the processor 110 to a peripheral device such as the display 194 and the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the electronic device 100. The processor 110 communicates with the display 194 by using a DSIinterface, to implement a display function of the electronic device 100.

The GPIO interface may be configured by using software. The GPIO interface may be configured to transmit a control signal, or may be configured to transmit a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, a MIPI interface, or the like.

The USB interface 130 is an interface conforming to a USB standard specification, and may be specifically a Mini USB interface, a Micro USB interface, a USB Type-C interface, or the like. The USB interface 130 may be configured to connect to the charger to charge the electronic device 100, or may be used for data transmission between the electronic device 100 and a peripheral device, or may be configured to connect to a headset, to play audio by using the headset. The interface may alternatively be configured to connect to another electronic device such as an AR device.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input by using a wireless charging coil of the electronic device 100. The charging management module 140 may supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device 100 may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium- and highfrequency signal. The demodulator is configured to demodulate a received electromagnetic wave signal into a low-frequency baseband signal. Next, the demodulator transmits the demodulated low-frequency baseband signal to the baseband processor for processing. The low-frequency baseband signal is processed by the baseband processor and then transmitted to an application processor. The application processor outputs a sound signal by using an audio device (not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution for wireless communication solution including a wireless local area network (wireless local area network, WLAN) (for example, a wireless fidelity (wireless fidelity, Wi-Fi) network), Bluetooth (Bluetooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the electronic device 100. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, and perform frequency modulation and amplification on the signal. The amplified signal is converted into an electromagnetic wave and radiated out via the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), new radio access technology (new radio access technology, NR), BT, GNSS, WLAN, NFC, FM, and/or IR technologies, and the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS) and/or satellite-based augmentation systems (SBAS).

The electronic device 100 implements a display function through the GPU, the display 194, the application processor, and the like. The GPU is a microprocessor for image processing, and is connected to the display 194 and the application processor. The GPU is configured to perform mathematical and geometric calculations and perform graphics rendering. The processor 110 may include one or more GPUs and execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a Micro-LED, a Micro-OLED, a quantum dot light emitting diode (quantum dot light emitting diodes, QLED), or the like.

The electronic device 100 can implement a photographing function by using the ISP, the camera 193, the video codec, the GPU, the display 194, the application processor, and the like.

The ISP is used to process data fed back by the camera 193. For example, during photographing, a shutter is enabled. Light is transferred to a photosensitive element of the camera through a lens, and an optical signal is converted into an electrical signal. The photosensitive element of the camera transfers the electrical signal to the ISP for processing, and therefore, the electrical signal is converted into an image visible to a naked eye. The ISP may also perform algorithm optimization on image noise point, brightness, and skin tone. The ISP may alternatively optimize parameters such as exposure and a color temperature of a photographing scenario. In some embodiments, the ISP may be disposed in the camera 193.

The camera 193 is configured to capture a static image or a video. An optical image of an object is generated through a lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in RGB and YUV formats. In some embodiments, the electronic device 100 may include one or more cameras 193.

The digital signal processor is configured to process a digital signal, and in addition to a digital image signal, may further process another digital signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU may be used to implement an application such as intelligent cognition of the electronic device 100, for example, image recognition, facial recognition, voice recognition, and text understanding.

The external memory interface 120 may be configured to connect to an external storage card such as a Micro SD card, to expand a storage capability of the electronic device 100. The external storage card communicates with the processor 110 by using the external memory interface 120, so as to implement a data storage function, such as storing a file such as music or a video in the external storage card.

The internal memory 121 may be configured to store computer executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data or a contacts) created during use of the electronic device 100, and the like. In addition, the internal memory 121 may include a high-speed random access memory, and may further include a nonvolatile memory, for example, at least one magnetic disk storage device, a flash memory, or a universal flash storage (universal flash storage, UFS). The processor 110 runs the instructions stored in the internal memory 121 and/or the instructions run and stored in the memory disposed in the processor, to implement various functional applications and data processing of the electronic device 100.

The electronic device 100 may implement an audio function by using an audio module 170, a speaker 170A, a receiver 170B, a microphone 170C, a headset jack 170D, an application processor, and the like, for example, implement a music playback function and a recording function.

The audio module 170 is configured to convert digital audio information into an analog audio signal output, and is further configured to convert an analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode by using the loudspeaker 170A.

The receiver 170B, also referred to as an "earpiece", is configured to convert an audio electrical signal into a sound signal. When the electronic device 100 is used to answer a call or receive voice information, the receiver 170B may be put close to a human ear, to receive a voice.

The microphone 170C, also referred to as a "mouthpiece" or a "megaphone", is configured to convert a sound signal into an electrical signal. When making a call or sending voice information, a user may speak with the mouth approaching the microphone 170C, to enter a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may be alternatively disposed in the electronic device 100, to collect a sound signal, implement noise reduction, recognize a sound source, implement a directional recording function, and the like.

The headset jack 170D is configured to connect a wired headset. The headset jack 170D may be a USB interface 130, or may be a 3.5 mm open mobile terminal platform (open mobile terminal platform, OMTP) standard interface or cellular telecommunication industry association of the USA (cellular telecommunication industry association of the USA, CTIA) standard interface.

The pressure sensor 180Ais configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates having conductive materials. When force is exerted on the pressure sensor 180A, capacitance between electrodes changes. The electronic device 100 determines the strength of the pressure based on the change of the capacitance. When a touch operation is performed on the display 194, the electronic device 100 detects strength of the touch operation based on the pressure sensor 180A. The electronic device 100 may further calculate a position of the touch based on a detection signal of the pressure sensor 180A. In some embodiments, touch operations that are performed on a same touch position but have different touch operation strength may correspond to different operation instructions.

The gyro sensor 180B may be configured to determine a motion posture of the electronic device 100. In some embodiments, an angular velocity of the electronic device 100 around three axes (that is, x, y, and z axes) may be determined by using the gyroscope sensor 180B. The gyro sensor 180B may be used for image stabilization during photographing. The gyro sensor 180B may also be used for navigation and motion-controlled gaming scenarios.

The barometric pressure sensor 180C is configured to measure barometric pressure. In some embodiments, the electronic device 100 calculates an altitude by using a value of the barometric pressure measured by the barometric pressure sensor 180C, to assist in positioning and navigation.

The magnetic sensor 180D includes a Hall sensor. The electronic device 100 may detect opening and closing of the flip leather case by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set.

The acceleration sensor 180E may detect acceleration values of the electronic device 100 in all directions (generally in three axes). When the electronic device 100 is stationary, a magnitude and a direction of gravity may be detected. The acceleration sensor may be further configured to recognize a posture of the electronic device, and is applied to an application such as switching between landscape orientation and portrait orientation or a pedometer.

The distance sensor 180F is configured to measure a distance. The electronic device 100 may measure a distance through infrared or laser. In some embodiments, in a photographing scenario, the electronic device 100 may measure a distance by using the distance sensor 180F, to implement quick focusing.

The optical proximity sensor 180G may include, for example, a light emitting diode (LED) and an optical detector such as a photodiode. The light emitting diode may be an infrared light emitting diode. The electronic device 100 may emit infrared light by using the light emitting diode. The electronic device 100 detects infrared reflected light from a nearby object by using the photodiode. When detecting sufficient reflected light, the electronic device 100 may determine that there is an object near the electronic device 100. When detecting insufficient reflected light, the electronic device 100 may determine that there is no object near the electronic device 100. The electronic device 100 may detect, by using the optical proximity sensor 180G, that a user holds the electronic device 100 close to an ear for a call, so that automatic screen-off is implemented to achieve power saving. The optical proximity sensor 180G may be further configured to automatically unlock and lock the screen in a leather cover mode and a pocket mode.

The ambient light sensor 180L is configured to sense luminance of ambient light. The electronic device 100 may adaptively adjust a luminance of the display 194 based on perceived brightness of the ambient light. The ambient light sensor 180L may be further configured to automatically adjust white balance during photo taking. The ambient light sensor 180L may further cooperate with the optical proximity sensor 180G to detect whether the electronic device 100 is in a pocket, so as to prevent an accidental touch.

The fingerprint sensor 180H is configured to collect a fingerprint. The electronic device 100 may implement fingerprint unlock, application lock accessing, fingerprint photographing, fingerprint-based call answering, and the like by using a feature of the collected fingerprint. For example, a fingerprint sensor may be configured on a front side (below the display 194) of the electronic device 100, or a fingerprint sensor may be configured on a back side (below the rear-facing camera) of the electronic device 100. In addition, a fingerprint recognition function may be implemented by configuring a fingerprint sensor on the touchscreen. To be specific, the fingerprint sensor may be integrated with the touchscreen to implement the fingerprint recognition function of the electronic device 100. In this case, the fingerprint sensor may be configured in the touchscreen, may be a part of the touchscreen, or may be configured in the touchscreen in another manner. In addition, the fingerprint sensor may be further implemented as a full-panel fingerprint sensor. Therefore, the touchscreen may be considered as a panel on which fingerprint collection can be performed at any position. In some embodiments, the fingerprint sensor may process the collected fingerprint (for example, whether the fingerprint is verified) and send the processed fingerprint to the processor 110, and the processor 110 performs corresponding processing based on a fingerprint processing result. In some other embodiments, the fingerprint sensor may further send a collected fingerprint to the processor 110, so that the processor 110 processes the fingerprint (for example, fingerprint verification). The fingerprint sensor in this application may use any type of sensing technology, including but not limited to an optical sensing technology, a capacitive sensing technology, a piezoelectric sensing technology, or an ultrasonic sensing technology.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 reduces performance of a processor near the temperature sensor 180J, to reduce power consumption and implement heat protection. In some other embodiments, when the temperature is lower than another threshold, the electronic device 100 heats the battery 142, to avoid an abnormal shutdown of the electronic device 100 caused by a low temperature. In some other embodiments, when the temperature is lower than still another threshold, the electronic device 100 boosts an output voltage of the battery 142, to avoid an abnormal shutdown caused by a low temperature.

The touch sensor 180K is also referred to as a "touch panel". The touch sensor 180K may be disposed on the display 194, and the touch sensor 180K and the display 194 form a touchscreen. The touch sensor 180K is configured to detect a touch operation performed on or near the touch sensor 180K. The touch sensor may transmit the detected touch operation to the application processor, to determine a touch event type. The touch sensor 180K may provide a visual output related to the touch operation by the display 194. In some other embodiments, the touch sensor 180K may be alternatively disposed on a surface of the electronic device 100, and is located on a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may alternatively contact a human pulse, and receive a blood pressure beating signal. In some embodiments, the bone conduction sensor 180M may be alternatively disposed in a headset, to form a bone conduction headset. The audio module 170 may obtain a voice signal through parsing based on the vibration signal of the vibration bone of the vocal-cord part, that is obtained by the bone conduction sensor 180M, to implement a voice function. The application processor may parse heart rate information based on the blood pressure beating signal obtained by the bone conduction sensor 180M, to implement a heart rate detection function.

A button 190 includes a power button, a volume button, and the like. The button 190 may be a mechanical button, or may be a touch-type button. The electronic device 100 may receive a button input, and generate a button signal input related to user setting and function control of the electronic device 100.

The motor 191 may generate a vibration prompt. The motor 191 may be configured to provide a vibration prompt for an incoming call, and may be further configured to provide a touch vibration feedback. For example, touch operations performed on different applications (for example, photo taking and audio playing) may correspond to different vibration feedback effects. For touch operations performed on different regions of the display 194, the motor 191 may further correspond to different vibration feedback effects. Different application scenarios (for example, a time reminder, information receiving, an alarm clock, and a game) may further correspond to different vibration feedback effects. A touch vibration feedback effect may be further customized.

The indicator 192 may be an indicator light, may be configured to indicate a charging state and a battery change, and may be further configured to indicate a message, a missed call, a notification, and the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support one or N SIM card interfaces. N is a positive integer greater than 1. The SIM card interface 195 can support a nano-SIM card, a micro-SIM card, a SIM card, and the like. A plurality of cards may be inserted into a same SIM card interface 195 at the same time. The plurality of cards may be of the same type or different types. The SIM card interface 195 may further be compatible with different types of SIM cards. The SIM card interface 195 may also be compatible with an external memory card. The electronic device 100 interacts with a network by using a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

Although not shown in FIG. 2, the electronic device 100 may further include a Bluetooth apparatus, a positioning apparatus, a flash, a micro projection apparatus, a near field communication (near field communication, NFC) apparatus, and the like. Details are not described herein.

The following describes in detail a method for enabling a function in an application provided in this application by using an example in which the electronic device is a mobile phone.

The mobile phone can provide a plurality of functions for the user, such as a contacts function, a phone function, an email function, a message function, and a blog function. The plurality of functions may be set in one application, or may be set in different applications. Each function may correspond to a function interface. For example, the contacts function corresponds to a Contacts interface, the phone function corresponds to a Phone interface, and the email function correspond to an Email interface.

The mobile phone may display a main interface. The main interface may include a response area corresponding to at least one contact and a response area corresponding to at least one function. The main interface includes a Messages interface, a Contacts interface, and an Email interface.

In this application, the contact may be a single contact, and the single contact is, for example, Zhang San or Li Si. The contact may also be a contact group, and the contact group includes a plurality of contacts. For example, the contact group is a service group A, and the service group A includes Zhang San and Li Si. Further, the response area corresponding to the contact may include information for indicating the contact. For example, the response area corresponding to the contact may include but is not limited to one or more of an avatar, a name, a contact method, a chat record (between the user and the contact), and an email record (between the user and the contact) that are of the contact. For example, a response area corresponding to Zhang San includes an avatar of Zhang San, a name of Zhang San, and a chat record.

The response area corresponding to the function may include information for indicating the function, for example, a function icon and/or a function name. For example, a response area corresponding to a message function includes a Messages icon and a message name.

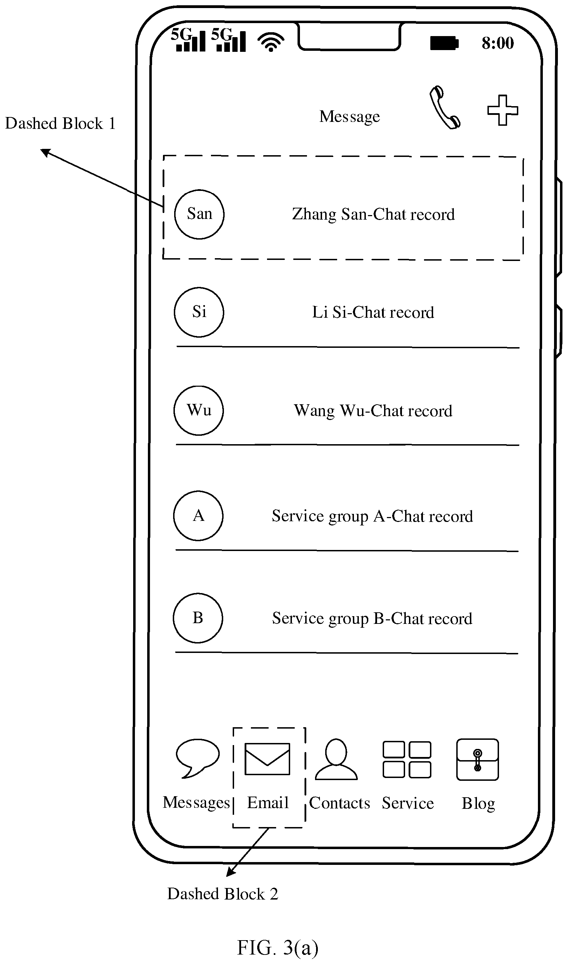

FIG. 3(a) to FIG. 3(c) are a schematic diagram of a group of main interfaces according to an example of this application. FIG. 3(a) is a schematic diagram when the main interface is a Messages interface. For example, the Messages interface includes response areas corresponding to five contacts, where the five contacts are respectively Zhang San, Li Si, Wang Wu, a service group A, and a service group B. For example, the response area corresponding to Zhang San includes an avatar (represented by ∘), a name "Zhang San", and a chat record that are of Zhang San.

The Messages interface further includes response areas corresponding to seven functions. The message function, the email function, the contacts function, the service function, and the blog function of the seven functions are all located at the bottom of the Messages interface. The phone function and a plus sign function (represented by +) are all located at the upper right of the Messages interface. The plus sign function may correspond to different functions in different function interfaces. For example, the response area corresponding to the message function includes a Messages icon and a message name.

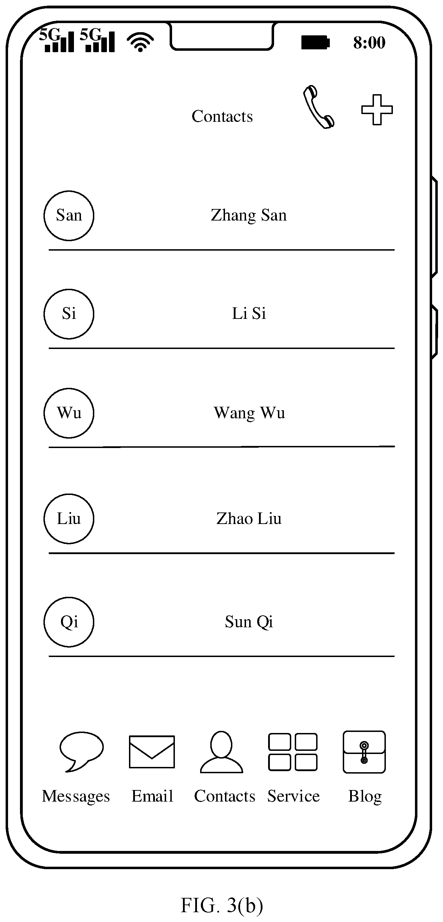

FIG. 3(b) is a schematic diagram when the main interface is a Contacts interface. For example, the Contacts interface includes response areas corresponding to five contacts. For example, a response area corresponding to Zhang San includes an avatar (represented by ∘) and a name "Zhang San" that are of Zhang San. The Contacts interface further includes response areas corresponding to seven functions, which are similar to the Messages interface in FIG. 3(a), and details are not described again.

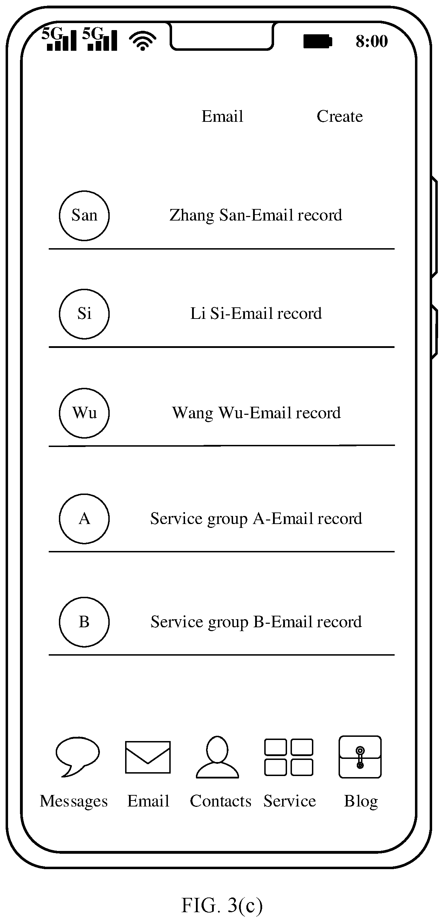

FIG. 3(c) is a schematic diagram when the main interface is an Email interface. For example, the Email interface includes response areas corresponding to five contacts. For example, a response area corresponding to Zhang San includes an avatar (represented by ∘), a name "Zhang San", and an email record that are of Zhang San. The Email interface further includes response areas corresponding to seven functions, which are similar to the Messages interface in FIG. 3(a), and details are not described again.

It should be noted that in this application, when the user touches a response area corresponding to a contact, the mobile phone may display, based on at least one or more parameters of a touch position, touch duration, and a touch pressure of the user, an interface corresponding to a touch operation of the user. Optionally, the response area corresponding to the contact may be a rectangular area, and the rectangular area not only includes information for indicating the contact, but also may include a blank area. For example, in the Messages interface in FIG. 3(a), the response area corresponding to Zhang San is framed by using a dashed-line box 1. When a touch position of a finger of the user is located in the dashed-line box 1, the mobile phone may determine that a contact selected by the user is Zhang San. Similarly, the response area corresponding to the function may also be a rectangular area, and the rectangular area not only includes information for indicating the function, but also may include a blank area. For example, in the Messages interface in FIG. 3(a), a response area corresponding to an email is framed by using a dashed-line box 2. When a touch position of a finger of the user is located in the dashed-line box 2, the mobile phone may determine that a function selected by the user is an email.

It should be further noted that, in a schematic diagram of a group of main interfaces in FIG. 3(a) to FIG. 3(c), a sliding bar may be further included. The sliding bar may be located on a right side or a left side of the main interface. The user slides the sliding bar by using a finger to implement sliding up and down of a response area corresponding to a contact displayed in the main interface. Alternatively, the sliding bar may be located above or below the main interface, and the user slides the sliding bar by using a finger to implement sliding left or right of a response area corresponding to a contact displayed in the main interface. For example, in FIG. 3(b), although only response areas corresponding to five contacts are displayed on the current main interface, the user may slide the sliding bar, to implement sliding up and down or sliding left and right of the response areas corresponding to the contacts displayed in the main interface, and display response areas corresponding to other contacts.

In the method for enabling a function in an application provided in this application, a user may directly deliver, in a main interface of an application, an operation instruction for a target function of a target contact, without the need of the user to touch a button in the interface for a plurality of times or switch a display interface for a plurality of times, thereby reducing user operations.

The following uses an example in which the Messages interface is a main interface for description. After the user starts the application, a Messages interface displayed by the application in the mobile phone is shown in FIG. 3(a). In the Messages interface, the user can perform different target operations on a target contact, for example, sending an email to the target contact, sending a message to the target contact, making a call to the target contact, and viewing a blog of the target contact.

In this application, the user may implement, in at least three manners, the operation of performing the target function on the target contact in the Messages interface. For details, refer to the following first optional implementation to the following third optional implementation.

In a first optional implementation, after determining that the response area corresponding to the target contact is touched by the finger of the user for first preset duration, the mobile phone generates and displays a first icon in a touch position of the finger of the user in the Messages interface.

For example, the first icon may be generated based on information included in the response area corresponding to the target contact. For example, the target contact is Zhang San, the response area corresponding to Zhang San includes an avatar of Zhang San, a name of Zhang San, and a chat record, and the first icon may include the avatar of Zhang San, or include the name of Zhang San, or include the avatar of Zhang San and the name of Zhang San, or include the avatar of Zhang San, the name of Zhang San, and the chat record.

The first icon is in a movable state. The user may drag the first icon in the Messages interface, and drag the first icon to a target area corresponding to the target function. The target area corresponding to the target function may be an area whose distance from the response area corresponding to the target function is less than a first preset distance. In an optional implementation, the target area corresponding to the target function includes a second icon corresponding to the target function, and the user may drag, in the Messages interface, the first icon to overlap the second icon, or until a distance between the first icon and the second icon is less than the first preset distance. Correspondingly, the mobile Phone interface jumps from the main interface to the function interface corresponding to the target function.

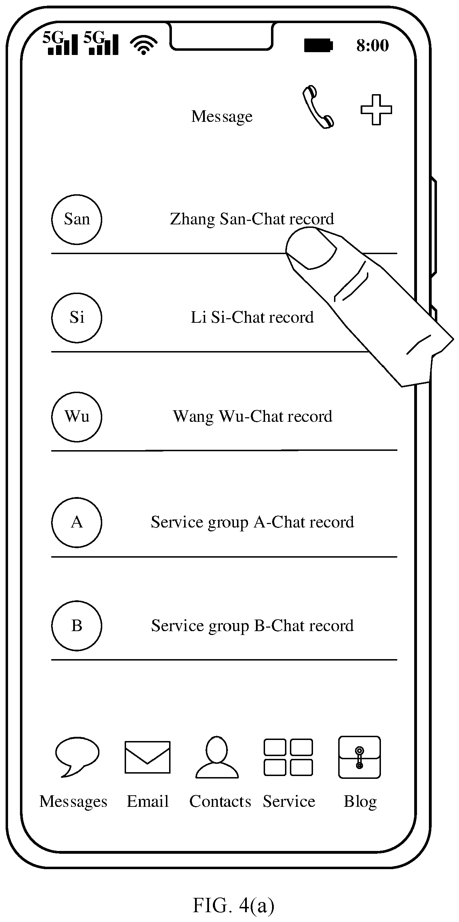

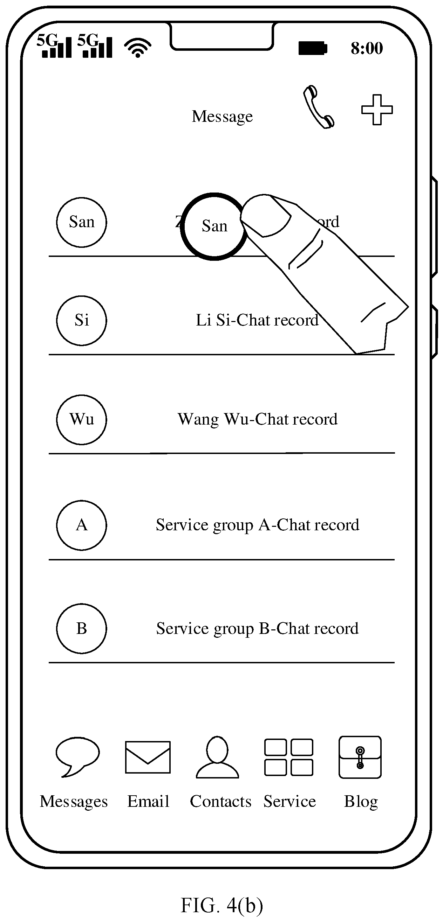

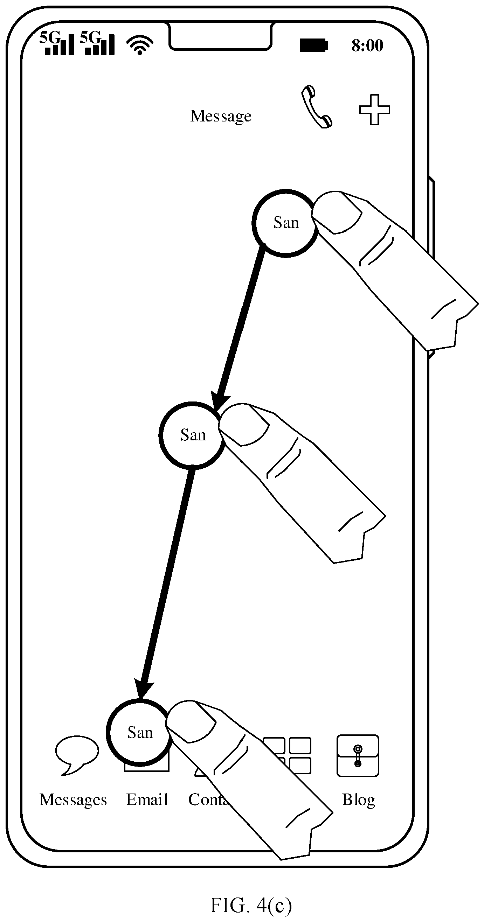

FIG. 4(a) to FIG. 4(f) are a schematic diagram of displaying a first group of interfaces for sending an email by a user according to an example of this application. For example, the user wants to send an email to Zhang San, where Zhang San is a target contact, and an email function is a target function. The user may use a finger to touch a response area corresponding to Zhang San, and the finger of the user may be shown in FIG. 4(a). When the finger of the user touches the response area corresponding to Zhang San for first preset duration, the first icon shown in FIG. 4(b) is displayed in the Messages interface, where the first icon is specifically an avatar of Zhang San. Further, the user may drag the first icon (that is, the avatar of Zhang San) to the target area corresponding to the email function, to enable the email function. For a dragging track of dragging the first icon (that is, the avatar of Zhang San) by the finger of the user, refer to FIG. 4(c).

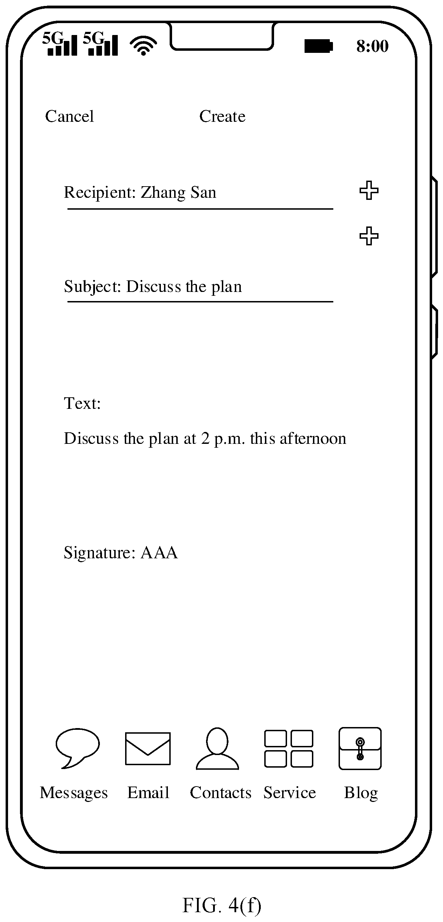

The Email interface corresponding to the email function is shown in FIG. 4(f), that is, the display interface is switched from the interface in FIG. 4(a) to the interface in FIG. 4(f). Because the email function has acquired that the target contact is Zhang San, Zhang San may be directly displayed in the recipients, and the user does not need to select a recipient from the Email interface again.

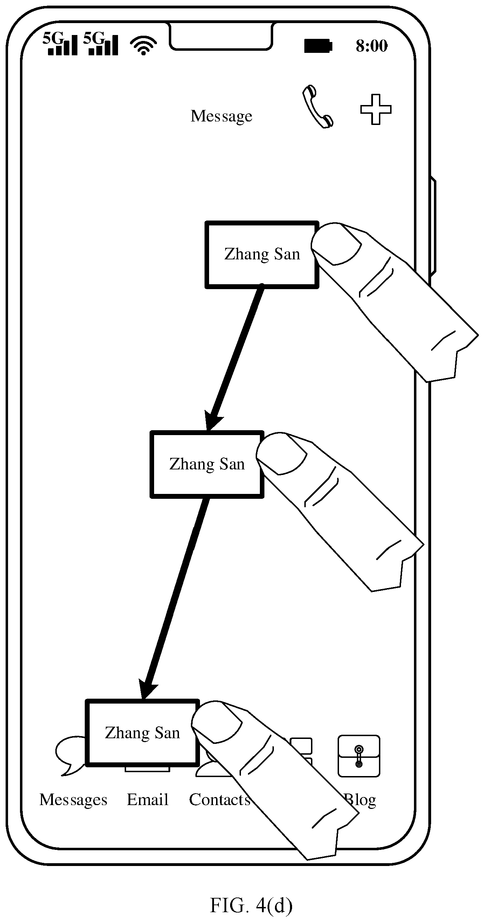

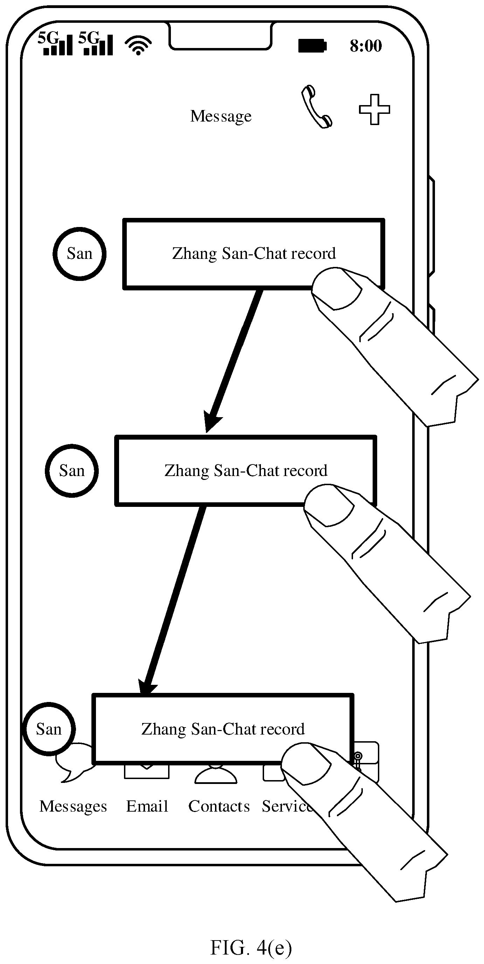

In addition, the first icon may also be a name of Zhang San. For example, FIG. 4(d) shows an example of a dragging track of dragging the first icon (that is, the name of Zhang San) by the finger of the user. Alternatively, the first icon may be an avatar of Zhang San, a name of Zhang San, and a chat record. For example, FIG. 4(e) shows a dragging track of dragging the first icon (that is, the avatar of Zhang San, the name of Zhang San, and the chat record) by the finger of the user. Certainly, the first icon may also be a response area corresponding to a complete target contact, or another icon used to indicate the target contact. This is not limited in this application.

It should be noted that, in FIG. 4(c), FIG. 4(d), and FIG. 4(e), only the first icon is drawn, and a response area corresponding to a previously existing contact and a response area corresponding to a function are not shown, so that a dragging track of dragging the first icon by the finger of the user is more clearly indicated. However, in an actual operation, a response area corresponding to a contact and a response area corresponding to a function are still displayed in a Messages interface. This description is also applicable to other schematic diagrams used to indicate icon movement.

In a second optional implementation, after determining that the response area corresponding to the target function is touched by the finger of the user for second preset duration, the mobile phone generates and displays a second icon in a touch position of the finger of the user in the Messages interface.

For example, the second icon may be generated based on information included in the response area corresponding to the target function. For example, the target function is an email function, the response area corresponding to the email function includes an Email icon and an email name, and the second icon may include an Email icon, or include an email name, or include an Email icon and an email name.

The second icon is in a movable state. The user may drag the second icon in the Messages interface, and drag the second icon to a target area corresponding to the target function. The target area corresponding to the target contact may be an area whose distance from the response area corresponding to the target contact is less than a second preset distance. In an optional implementation, the target area corresponding to the target contact includes the first icon corresponding to the target contact, and the user may drag, in the Messages interface, the second icon to overlap the first icon, or until a distance between the first icon and the second icon is less than the second preset distance. Correspondingly, the mobile Phone interface jumps from the main interface to the interface corresponding to the target function.

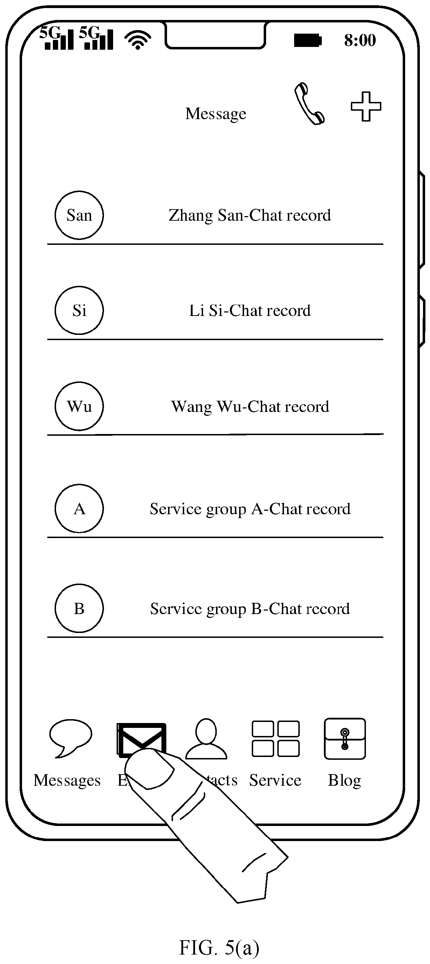

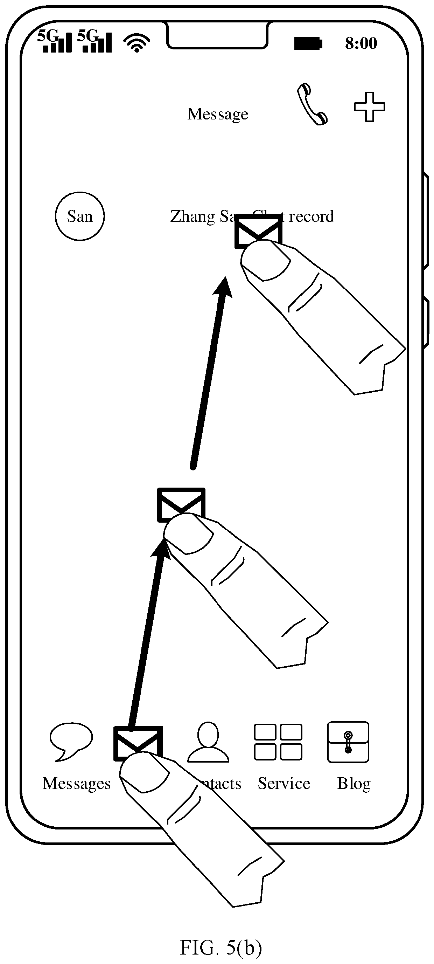

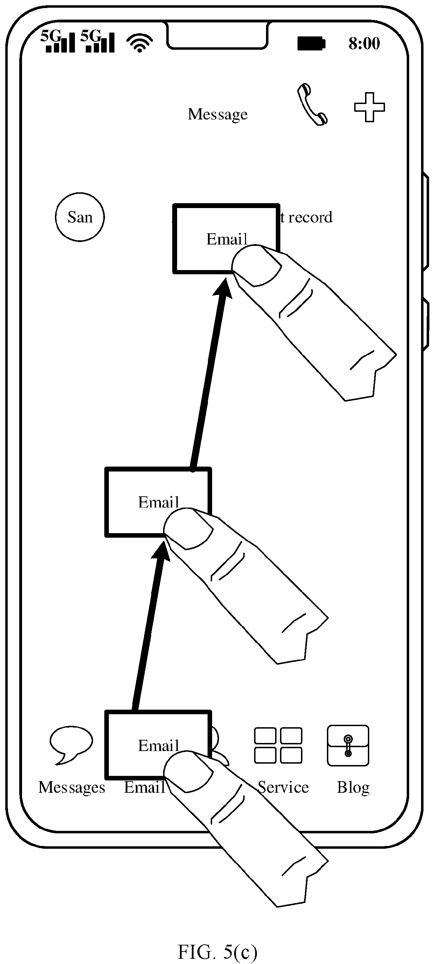

FIG. 5(a) to FIG. 5(c) are a schematic diagram of displaying a second group of interfaces for sending an email by a user according to an example of this application. For example, the user wants to send an email to Zhang San, where Zhang San is a target contact, and an email function is a target function. The user may touch, by using a finger, a response area corresponding to the email function for second preset duration. A second icon shown in FIG. 5(a) is displayed in the Messages interface, and the second icon is specifically an Email icon. Further, the user may drag the second icon (that is, the Email icon) to the target area of the target contact, so as to enable the email function. For a dragging track of dragging the second icon (that is, the Email icon) by the finger of the user, refer to FIG. 5(b). The Email interface corresponding to the email function is shown in FIG. 4(f). In addition, the second icon may also be an email name, for example, as shown in FIG. 5(c). Certainly, the second icon may also be a response area corresponding to a complete target function, or another icon used to indicate the target function. This is not limited in this application.

In a third optional implementation, the mobile phone displays the first icon and the second icon in the Messages interface after determining that the response area corresponding to the target contact is touched by the finger of the user for third preset duration, and that the response area corresponding to the target function is touched by the other finger of the user for fourth preset duration.

In an optional example, the first icon may be generated based on information included in a response area corresponding to the target contact. For example, the target contact is Zhang San, the response area corresponding to Zhang San includes an avatar of Zhang San, a name of Zhang San, and a chat record, and the first icon includes the avatar of Zhang San. In an optional example, the second icon may be generated based on information included in a response area corresponding to the target function. For example, the target function is an email function, the response area corresponding to the email function includes an Email icon and an email name, and the second icon includes the Email icon.

Both the first icon and the second icon are in a movable state, and the user may pinch the first icon and the second icon in the Messages interface by using two fingers. Specifically, the user may drag the first icon to the second icon by using a finger, and drag the second icon to the first icon by using another finger. When the distance between the first icon and the second icon is less than a third preset distance, the interface corresponding to the target function is displayed. In this application, the first preset distance, the second preset distance, and the third preset distance may be the same or different. This is not limited in this application.

In an optional example, the first icon and the second icon may be displayed in the Messages interface after the user touches, by using the index finger, the response area corresponding to the target contact for the third preset duration, and touches, by using the thumb, the response area corresponding to the target function for the fourth preset duration. Then, when the user pinches the first icon and the second icon by using the index finger and the thumb until the distance between the first icon and the second icon is less than the third preset distance, the interface corresponding to the target function is displayed. The third preset duration and the fourth preset duration may be the same or different. This is not limited in this application.

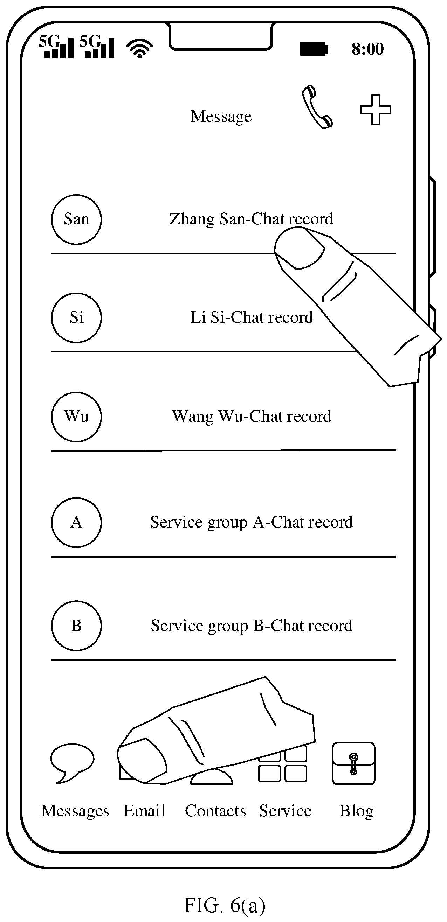

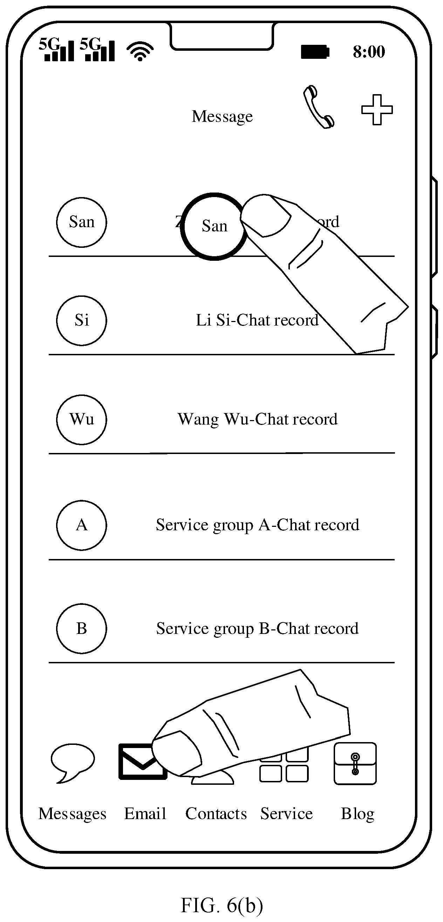

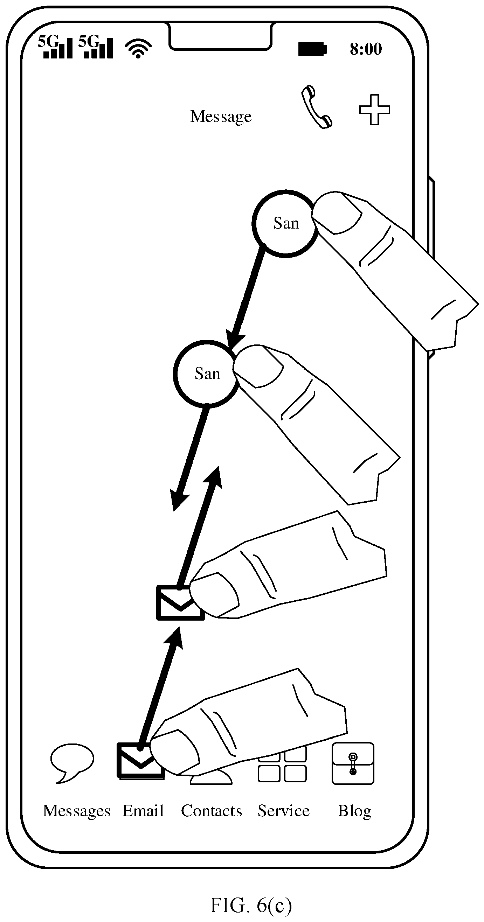

FIG. 6(a) to FIG. 6(c) are a schematic diagram of displaying a third group of interfaces for sending an email by a user according to an example of this application. The user wants to send an email to Zhang San, where Zhang San is a target contact, and an email function is a target function. The user may use an index finger to touch a response area corresponding to Zhang San, and use a thumb to touch a response area corresponding to an email function. For the two fingers of the user, refer to FIG. 6(a). After the index finger of the user touches the response area corresponding to Zhang San for third preset duration, and the thumb of the user touches the response area corresponding to the email function for fourth preset duration, the first icon and the second icon in FIG. 6(b) are displayed in the Messages interface, where the first icon is specifically an avatar of Zhang San, and the second icon is specifically an Email icon. The user may pinch the first icon (that is, the avatar of Zhang San) and the second icon (that is, the Email icon) by using two fingers until a distance between the first icon and the second icon is less than the third preset distance, so as to enable the email function. For a track in which the user pinches the first icon (that is, the avatar of Zhang San) and the second icon (that is, the Email icon) by using two fingers, refer to FIG. 6(c).

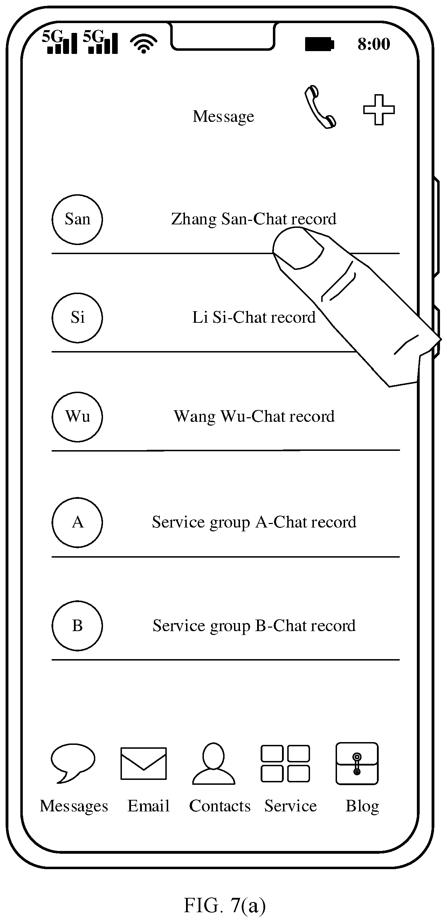

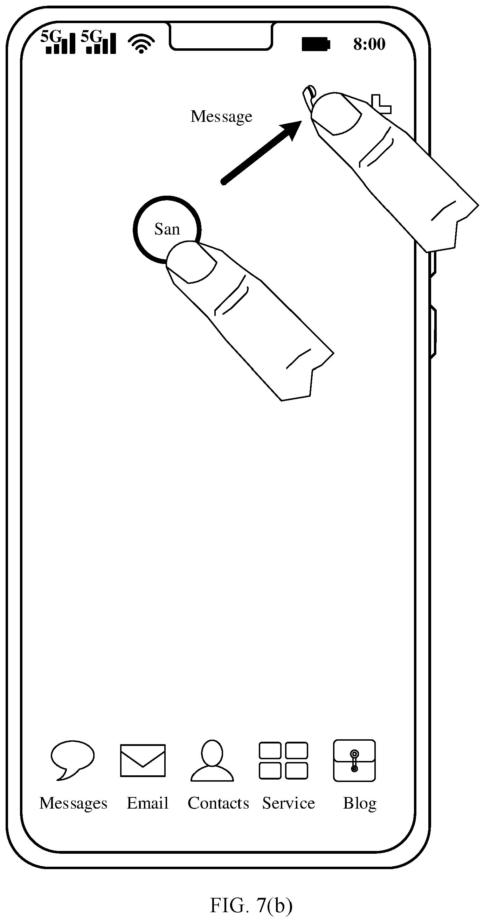

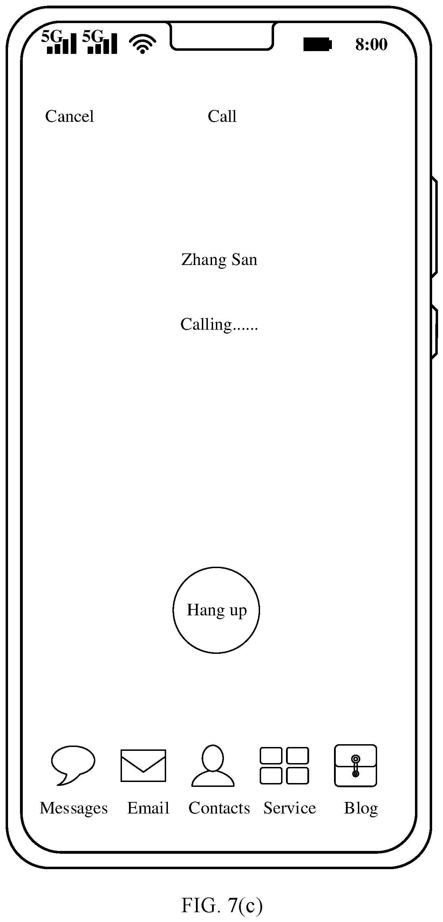

The foregoing embodiment is described merely by using an example in which the user sends an email to Zhang San in the Messages interface. In this application, the user may call Zhang San in the Messages interface. Refer to a schematic diagram of displaying a group of interfaces of calling a contact by a user shown in FIG. 7(a) to FIG. 7(c). Specifically, in FIG. 7(a), the user touches a response area corresponding to Zhang San with a finger, and then a first icon (that is, the avatar of Zhang San) is displayed in the Messages interface in FIG. 7(b). The user drags the first icon (that is, the avatar of Zhang San) to a target area of a phone function, to enter a Phone interface in FIG. 7(c).

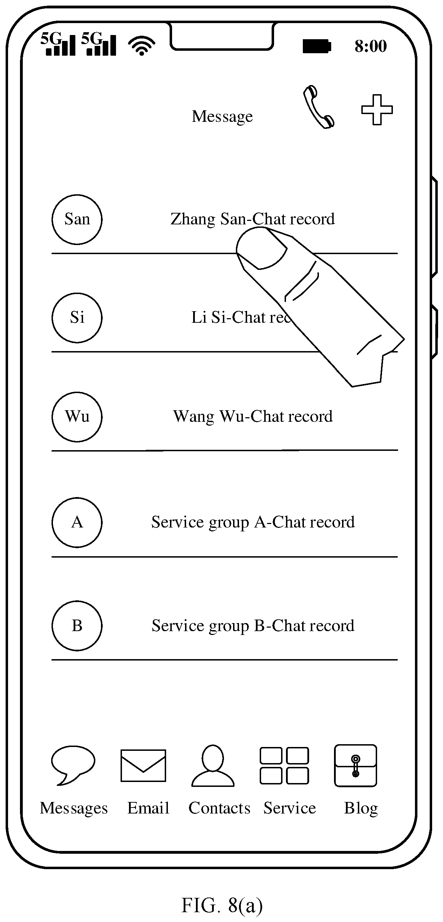

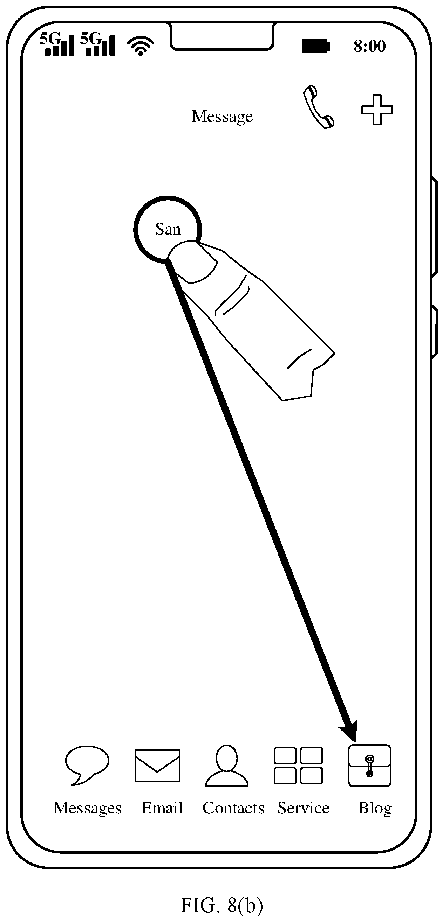

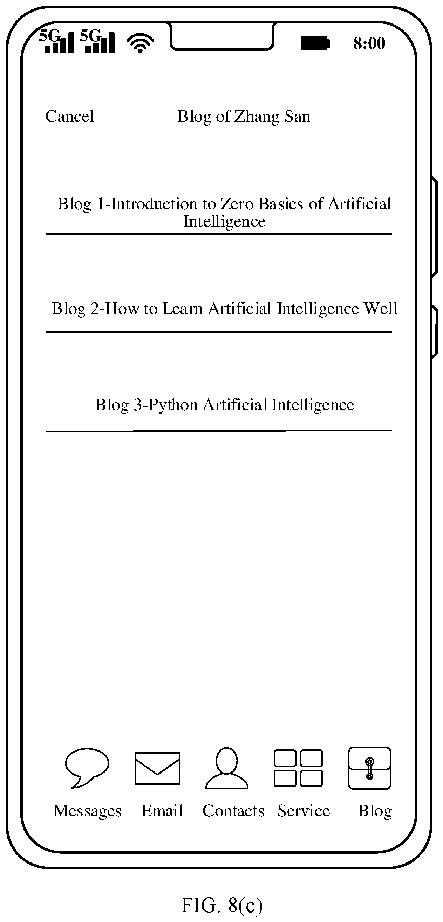

In this application, the user may also view the blog of Zhang San in the Messages interface. Refer to a schematic diagram of displaying a group of interfaces for viewing a blog of a contact by a user by using an application shown in FIG. 8(a) to FIG. 8(c). Specifically, in FIG. 8(a), the user touches the response area corresponding to Zhang San by using a finger. Then, as shown in FIG. 8(b), the first icon (that is, the avatar of Zhang San) is displayed in the Messages interface, and the user drags the first icon (that is, the avatar of Zhang San) to the target area of the blog function, to enter the Blog interface in FIG. 8(c).

In addition, in this application, the foregoing operation may be performed on another target contact, for example, Li Si. Details are not described again. Further, the target contact may also be a contact group, and the contact group includes a plurality of contacts. The contact group is, for example, a service group A and a service group B. Correspondingly, when a target function is enabled, the target function may be jointly executed for the plurality of contacts in the contact group.

For example, the target contact is a service group A, and the service group A includes Zhang San and Li Si. When the user drags the first icon corresponding to the service group A to the target area of the email function, the user enters the Email interface, and the recipients are all contacts in the service group A, that is, Zhang San and Li Si. That is, a same email may be sent to all contacts in the group in the Email interface. Similarly, when dragging the first icon corresponding to the service group A to the target area of the phone function, the user enters a Phone interface, and at this time, the application simultaneously calls all contacts in the service group A, that is, Zhang San and Li Si. That is, all contacts in the group may be simultaneously called on the Phone interface, that is, a conference call is initiated in the group.

In the foregoing embodiment, the target contact may be a single contact or a contact group. In addition, if the user wants to send an email or make a call to a plurality of target contacts at the same time, or implement other functions, the user may select the plurality of target contacts at the same time, and then execute the target function for the plurality of target contacts.

In an optional implementation, the user may touch the response area of any one of the plurality of target contacts for fifth preset duration, and the Messages interface displays the plurality of contacts in a selectable state. Further, the user may select other target contacts from the plurality of contacts in the selectable state. Then, the user may drag the first icon corresponding to any one of the target contacts to the target area of the target function.

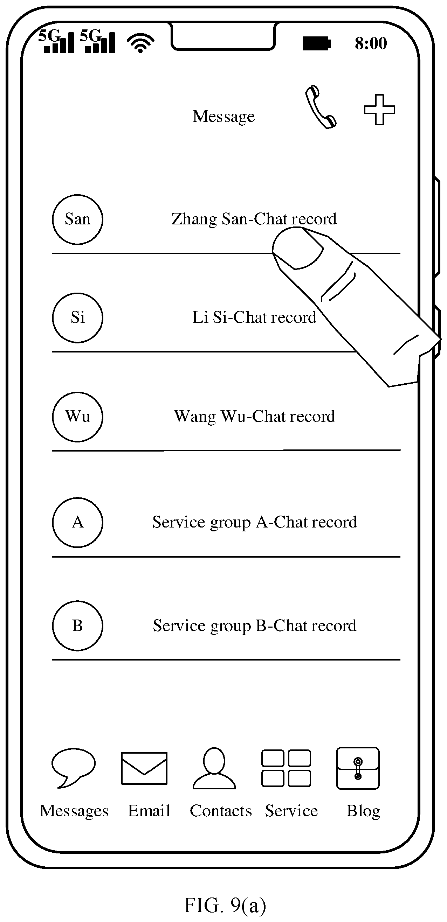

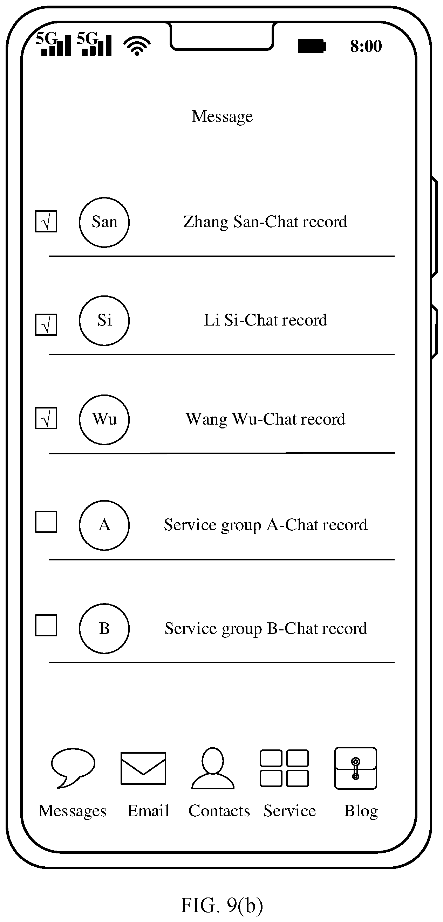

FIG. 9(a) to FIG. 9(f) are a schematic diagram of displaying a group of interfaces for sending an email to a plurality of target contacts by a user according to an example of this application. As shown in FIG. 9(a), for example, when the user wants to send an email to Zhang San, Li Si, and Wang Wu at the same time, the user may touch a response area corresponding to Zhang San for the fifth preset duration. As shown in FIG. 9(b), in the Messages interface, each contact is displayed as a selectable state (for example, a "o" is displayed before each contact avatar, to indicate that the contact is in a selectable state). Because the user has touched the response area corresponding to Zhang San for the fifth preset duration, Zhang San in the Messages interface is already in the selectable state. Further, the user may touch, by using a finger, response areas respectively corresponding to Li Si and Wang Wu, so as to select Zhang San, Li Si, and Wang Wu at the same time. As shown in FIG. 9(b), a "√" is displayed in "□" before the avatar of the contact in the selectable state.

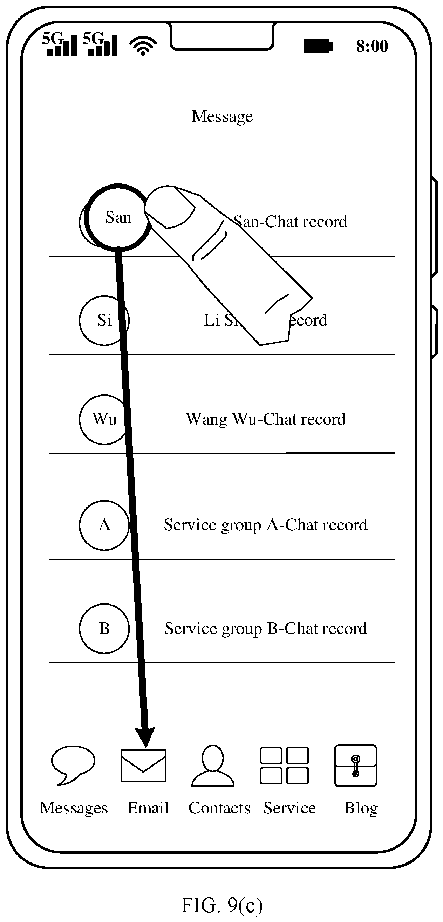

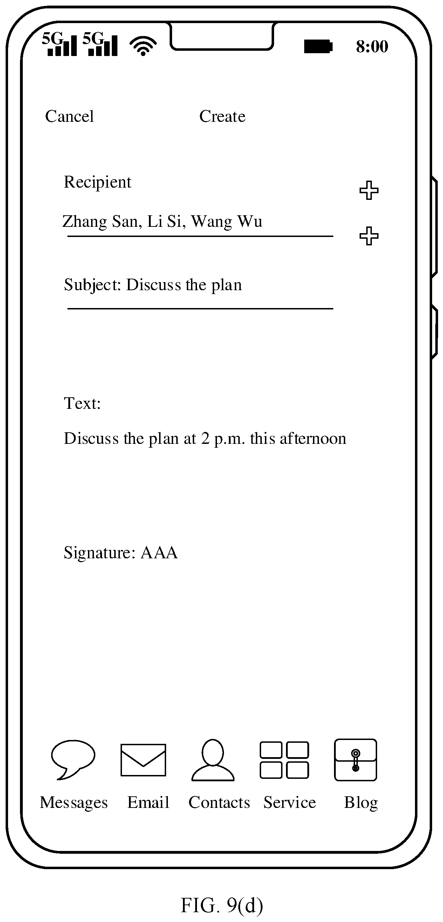

Further, the user may touch a response area corresponding to one of the target contacts to obtain a first icon. For example, if the response area corresponding to Zhang San is touched for the first preset duration, the first icon (that is, the avatar of Zhang San) in FIG. 9(c) is displayed in the Messages interface as a movable state. The user drags the first icon (that is, the avatar of Zhang San) to the target area of the email function, so as to enter the Email interface in FIG. 9(d). The user can send emails to Zhang San, Li Si, and Wang Wu at the same time.

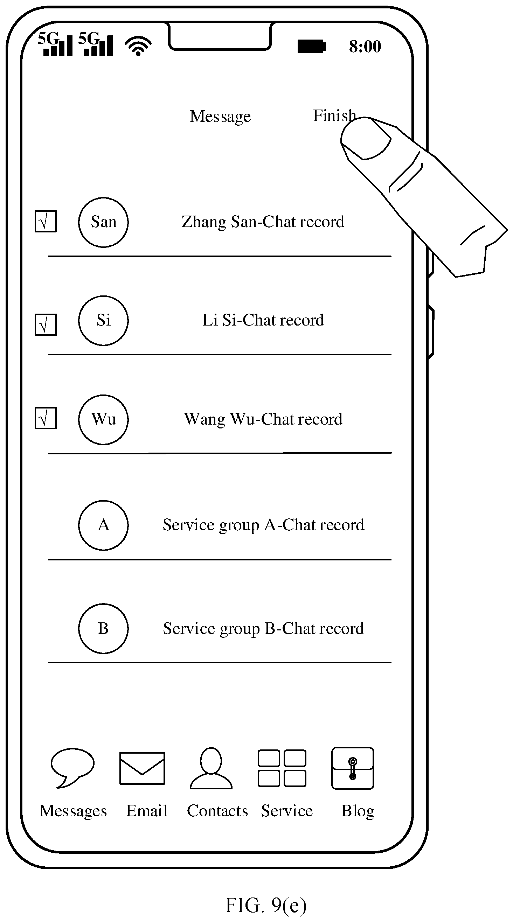

Optionally, when the user selects a plurality of target contacts, a "Finish" button may be displayed in the Messages interface. For example, referring to FIG. 9(e), after selecting a plurality of target contacts, the user touches the "Finish" button. Correspondingly, the mobile phone determines, based on a received instruction, the plurality of target contacts selected by the user. Then, the user touches the response area corresponding to one of the target contacts to obtain the first icon. Certainly, this application may not include a "Finish" button. After selecting a plurality of target contacts, the user directly touches a response area corresponding to one of the target contacts to obtain the first icon. This is not limited in this application.

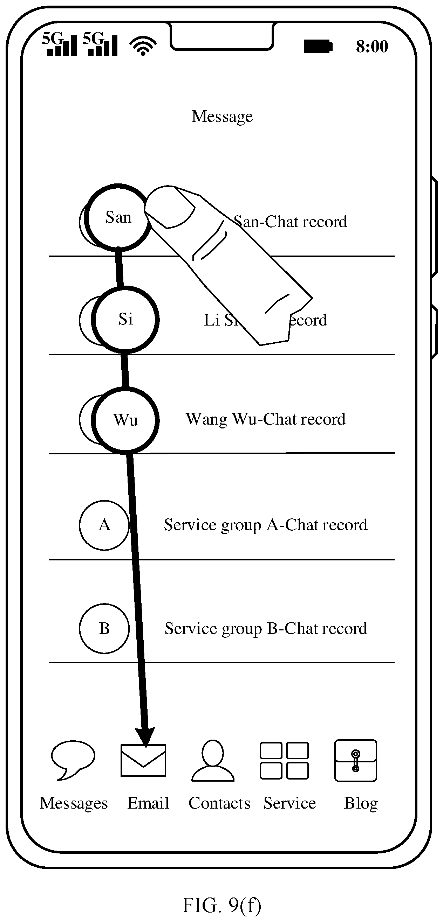

It should be added that, in the foregoing example, the user touches the response area corresponding to Zhang San for the first preset duration, the first icon (that is, the avatar of Zhang San) displayed in the Messages interface is in the movable state, and the user drags the avatar of Zhang San in the movable state to the target area corresponding to the email function. In addition, in this application, in the Messages interface, the first icons corresponding to other target contacts are displayed as the movable state. As shown in FIG. 9(f), in the Messages interface, the avatar of Zhang San is displayed as the movable state. In addition, avatars of other target contacts such as Li Si and Wang Wu are displayed as the movable state. In a process in which the user drags the avatar of Zhang San to the target area of the email function, first icons corresponding to other target contacts, that is, the avatar of Li Si and the avatar of Wang Wu, may also move with the finger of the user. After the finger of the user drags the avatar of Zhang San to the target area of the email function, the mobile phone jumps from the Messages interface to the Email interface. In this way, when executing the target function for a plurality of target contacts, the user may drag the first icons corresponding to the plurality of target contacts at the same time, thereby providing more intuitive display for the user and helping improve user experience.

In the foregoing example, the user touches the response area corresponding to Zhang San for the fifth preset duration, so that in the Messages interface, each contact is displayed as a selectable state. Further, the user touches the response area corresponding to Zhang San for the first preset duration, so that the first icon corresponding to Zhang San is displayed in the movable state in the Messages interface. In this example, response areas touched twice by the user correspond to a same contact. However, in another example, response areas may also correspond to different contacts, for example, the user touches the response area corresponding to Zhang San for the fifth preset duration, so that in the Messages interface, each contact is displayed as a selectable state. Further, the user touches the response area corresponding to Li Si for the first preset duration, so that the first icon corresponding to Li Si is displayed in the movable state in the Messages interface.

In addition, the user may further touch a blank area in the Messages interface except the response area corresponding to the contact and the response area corresponding to the function for the fifth preset duration, and in the Messages interface, each contact is displayed as a selectable state. The user touches the response area corresponding to Zhang San for the first preset duration, and the first icon corresponding to Zhang San is displayed in the movable state in the Messages interface.

In this application, when a plurality of target contacts are selected, not only a plurality of single contacts may be selected, but also a plurality of contact groups may be selected, or one or more single contacts and one or more contact groups may be selected. An implementation of selecting a contact group is similar to an implementation of selecting a single contact, and details are not described herein again.

It should be added that, for one or more target contacts selected by the user, selectable functions corresponding to the one or more target contacts may exist. In other words, in the Messages interface, not all functions may be used as target functions of the target contacts. For example, in the Messages interface shown in FIG. 4(a), the service function cannot be used as a target function of the target contact, and even if the user drags the first icon to the target area corresponding to the service function, the Messages interface cannot be switched from the Messages interface to a Service interface.

To better prompt the user of the selectable function corresponding to the target contact, the selectable function icon corresponding to the target contact may be highlighted in the Messages interface when the first icon is displayed.

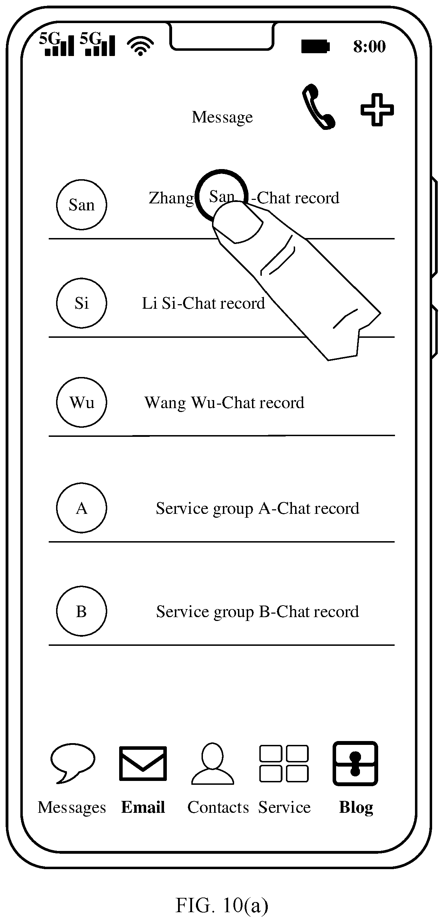

FIG. 10(a) to FIG. 10(c) are a schematic diagram of a group of interfaces highlighting a selectable function according to this application. In an example, as shown in FIG. 10(a), after the finger of the user touches the response area corresponding to Zhang San for the first preset duration, the first icon is displayed in the Messages interface, and one or more selectable function icons corresponding to the target contact are highlighted. Herein, the selectable function icons may be included in a response area of a corresponding selectable function. The one or more selectable function icons may include a second icon. Selectable functions include an email function, a blog function, a phone function, and a number adding function (you can add a contact as a friend on the message page).

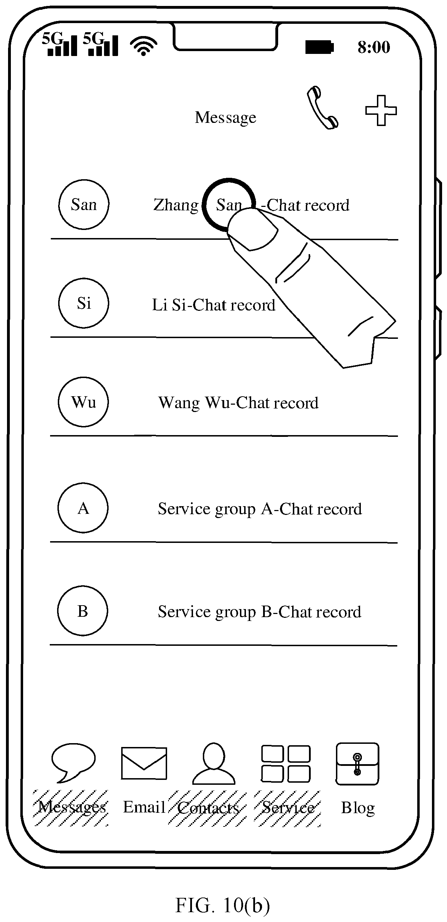

In still another example, as shown in FIG. 10(b), after the finger of the user touches the response area corresponding to Zhang San for the first preset duration, the first icon is displayed in the Messages interface, and one or more unselectable function icons corresponding to the target contact are displayed in a weakened (non-highlighted) manner. Herein, the unselectable function icons may be included in response areas corresponding to unselectable functions. The unselectable functions include the message function (the message function is unavailable because the current interface is the Messages interface), the contacts function, and the service function. It should be understood herein that, the unselectable function icons are displayed in a weakened manner in the Messages interface, that is, the selectable function icons are displayed in a highlighted manner in the Messages interface.

In this embodiment, the user may drag the first icon to the target area of the selectable function by using a finger based on a prompt in the display interface. For the mobile phone, when detecting that the user drags the first icon to the target area of the selectable function, the mobile phone may switch from a current Messages interface to a function interface corresponding to the selectable function. When detecting that the user drags the first icon to the target area of the unselectable function, the mobile phone may prompt the user that the selection function is unavailable.

In a possible implementation, different contacts correspond to different functions. For example, a user and Zhang San belong to a same service department, and the user may send a message to Zhang San and send an email to Zhang San; and a user and Li Si belong to different service departments, and the user can send an email to Li Si only, but cannot send a message to Li Si. Therefore, Zhang San and Li Si correspond to different functions respectively. In this way, in this application, each contact may correspond to a selectable function list of the contact. When the user selects a target contact in the Messages interface, the mobile phone may determine a selectable function list corresponding to the target contact based on the target contact selected by the user, and highlight icons corresponding to the selectable functions included in the selectable function list in the Messages interface.

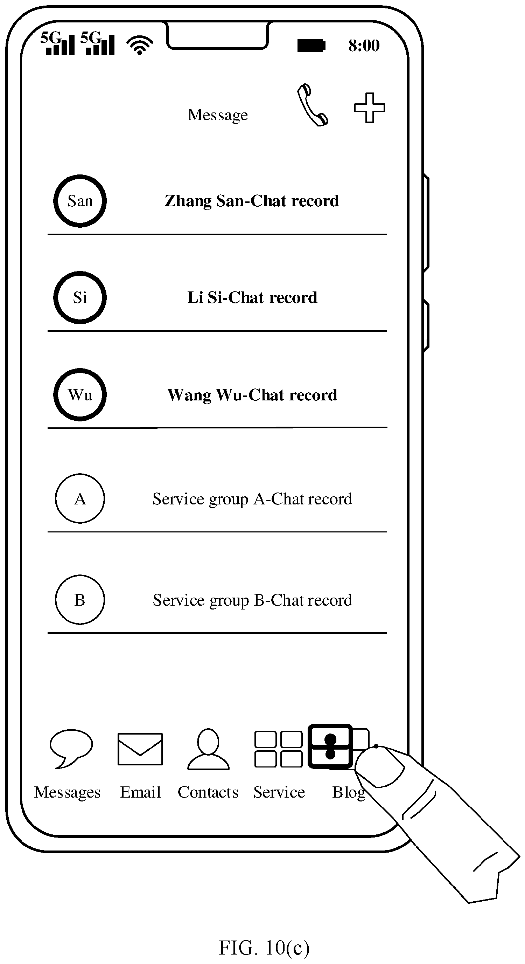

An example in which the user drags the first icon to the target area of the target function is merely used for description. This description is also applicable to a scenario in which the user drags the second icon to the target area of the target contact. For example, after the finger of the user touches the response area corresponding to the target function for second preset duration, the second icon is displayed in the Messages interface, and one or more selectable contact icons corresponding to the target function are highlighted. Herein, the selectable contact icons may be included in the response area of the corresponding selectable contact. One or more selectable contact icons include a first icon. For example, in FIG. 10(c), after the finger of the user touches the response area corresponding to the blog for the second preset duration, the second icon corresponding to the blog function is displayed in the Messages interface, and selectable contact icons corresponding to the blog function are highlighted, where the selectable contact is, for example, a single contact, contact icons of Zhang San, Li Si, and Wang Wu are highlighted. Similarly, icons of unselectable contacts corresponding to the target function may also be displayed in a weakened manner. For example, if the unselectable contacts are contact groups, contact icons of the service group A and the service group B are displayed in a weakened manner.

In addition, different functions may also correspond to their own selectable contact lists. When a user selects a target function in a Messages interface, a selectable contact list corresponding to the target function may be determined based on the target function selected by the user, and icons corresponding to selectable contacts included in the selectable contact list are highlighted in the Messages interface.

After the operation of completing the target function for the target contact is performed, the current function interface may be automatically switched back to the Messages interface. In this way, the user may continue to perform other target functions on the target contact again in the Messages interface, or perform other target functions on other target contacts again.

For example, in FIG. 4(f), the user touches a Send button in the Email interface, and sends the email to Zhang San. Correspondingly, it may be determined that the user has completed the email function, and the Email interface is automatically switched back to the Messages interface. Further, the user may touch a response area corresponding to Zhang San in the Messages interface, enter a message chat interface (of the user and Zhang San), and send a message to Zhang San, where the message is, for example, "I have sent you an email. Please check it."

For another example, in FIG. 7(c), after completing a call on the Phone interface, the user touches a hang-up button to hang up the call. Correspondingly, the mobile phone may determine that the user has completed the phone function, and automatically switch from the Phone interface back to the Messages interface. Further, the user may drag, in the Messages interface, the first icon corresponding to Zhang San to the target area corresponding to the email function, and send the conference call minutes to Zhang San.

In addition, in some other scenarios, the user may further combine a plurality of single contacts into a contact group in the Messages interface. For example, in FIG. 3(a), the user touches a response area corresponding to Zhang San by using a finger for the first preset duration, and the Messages interface displays a first icon (that is, an avatar of Zhang San) in a movable state. The user may drag the first icon (that is, the avatar of Zhang San) to a target area corresponding to Wang Wu, in this way, Zhang San and Wang Wu form a contact group. The user may further drag the first icon (that is, the avatar of Zhang San) to the target area corresponding to the service group B, so as to add Zhang San to the service group B.

In the foregoing embodiment, only an example in which the main interface is a Messages interface is used for description. This application is also applicable to a scenario in which the main interface is a Contacts interface, an Email interface, or another interface including a response area corresponding to a contact and a response area corresponding to a function. The specific implementation is similar to the foregoing Messages interface. Details are not described again.

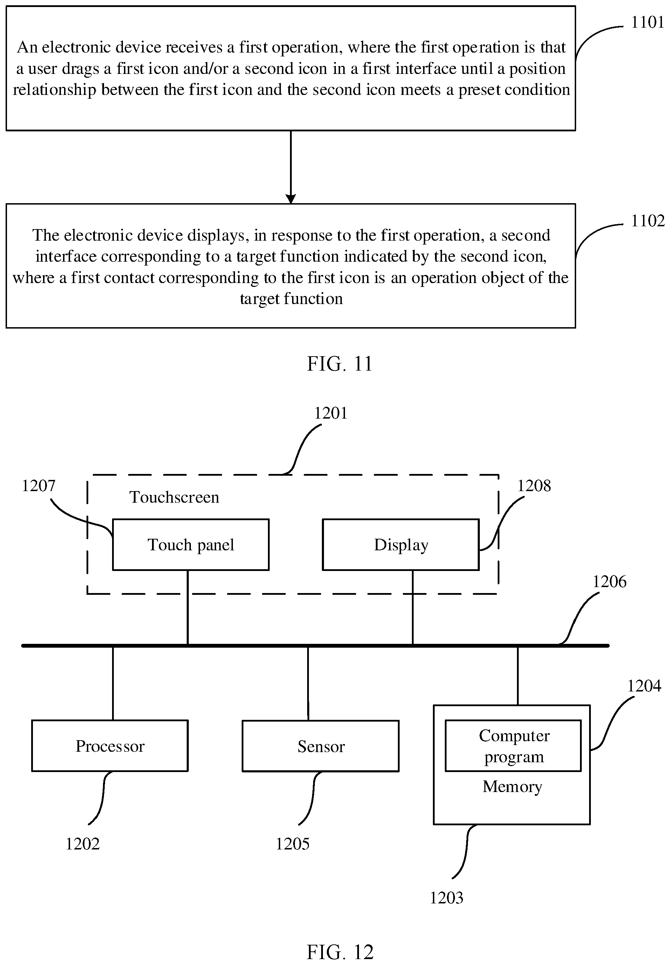

FIG. 11 shows an example of a procedure of a method for enabling a function in an application according to this application. The method is performed by an electronic device.

Step 1101. The electronic device receives a first operation, where the first operation is that a user drags a first icon and/or a second icon in a first interface until a position relationship between the first icon and the second icon meets a preset condition.

Step 1102. The electronic device displays, in response to the first operation, a second interface corresponding to a target function indicated by the second icon, where a first contact corresponding to the first icon is an operation object of the target function.

In a possible implementation, the first interface and the second interface belong to a same application or different applications.

In a possible implementation, the first icon includes a plurality of icons.

In a possible implementation, that a position relationship between the first icon and the second icon meets a preset condition includes: the first icon and the second icon overlap, or a distance between the first icon and the second icon is less than a preset distance. In this application, the preset distance may be a first preset distance or a second preset distance.

In a possible implementation, before the receiving a first operation, the method further includes: receiving a second operation, where the second operation is that the user touches a first response area corresponding to the first contact in the first interface for first preset duration; and generating, in response to the second operation, the first icon in a touch position of the second operation.

In a possible implementation, after the receiving a second operation, the method further includes: highlighting a plurality of selectable function icons, where the plurality of selectable function icons include the second icon.

In a possible implementation, the second icon includes any one of a Contacts icon, a Phone icon, an Email icon, a Messages icon, and a Blog icon.

In a possible implementation, the first contact is a contact group, and the contact group includes a plurality of contacts.

In a possible implementation, the method further includes: returning to the first interface from the second interface after the target function is executed on the first contact.

FIG. 11 shows a specific implementation of the procedure, which has been described in the foregoing method embodiments related to FIG. 3(a) to FIG. 3(c) to FIG. 10(a) to FIG. 10(c).

For example, with reference to the method embodiments related to FIG. 3(a) to FIG. 3(c) to FIG. 10(a) to FIG. 10(c), the first interface may be a main interface of the electronic device, for example, a Messages interface, a Contacts interface, or an Email interface of the electronic device. The second interface may be a function interface corresponding to the target function when the user triggers the target function in the first interface. For example, when the first interface is a Messages interface, the second interface may be an Email interface, a Phone interface, or the like. For another example, when the first interface is a Contacts interface, the second interface may be an Email interface, a Phone interface, a Messages interface, or the like.

In this application, the user may instruct the electronic device to perform the target function on one target contact, or may perform the target function on a plurality of target contacts. The following describes the cases.

Case 1: A target function is performed on a target contact.

Herein, the target contact may be a single contact, or may be a contact group.

For example, the target contact is a single contact, for example, the single contact is Zhang San.

In an example, that the user performs the second operation on the electronic device may be specifically that the finger of the user touches, in the Messages interface, a response area corresponding to Zhang San (that is, the target contact/the first contact) for the first preset duration. Correspondingly, the electronic device displays an avatar (that is, the first icon) of Zhang San in the Messages interface. Then the user performs a first operation on the electronic device. Specifically, the user drags, by using a finger, the avatar of Zhang San in the Messages interface to overlap with the Email icon (that is, the second icon) or a distance between the avatar of Zhang San and the Email icon is less than a preset distance, to enable the email function.

In still another example, the second operation performed by the user on the electronic device may be specifically that the finger of the user touches, in the Messages interface, a response area corresponding to an email function (that is, a target function) for second preset duration. Correspondingly, the electronic device displays an Email icon (that is, a second icon) in the Messages interface. Then the user performs a first operation on the electronic device. Specifically, the user drags, by using a finger, an Email icon in the Messages interface to overlap with the avatar (that is, the first icon) of Zhang San or a distance between the avatar of Zhang San and the Email icon is less than a preset distance, to enable the email function.

For example, the target contact is a contact group, for example, the single contact is a service group A.

In an example, the second operation performed by the user on the electronic device may be specifically that the finger of the user touches, in the Messages interface, a response area corresponding to the service group A (that is, the target contact/the first contact) for the first preset duration. Correspondingly, the electronic device displays an avatar (that is, the first icon) of the service group A in the Messages interface. Then, the user performs a first operation on the electronic device. Specifically, the user drags, by using a finger, the avatar of the service group A in the Messages interface to overlap with the Email icon (that is, the second icon) or a distance between the avatar of the service group A and the Email icon is less than a preset distance, to enable the email function.

In still another example, the second operation performed by the user on the electronic device may be specifically that the finger of the user touches, in the Messages interface, a response area corresponding to an email function (that is, a target function) for second preset duration. Correspondingly, the electronic device displays an Email icon (that is, a second icon) in the Messages interface. Then, the user performs a first operation on the electronic device. Specifically, the user drags, by using a finger, an Email icon in the Messages interface to overlap with the avatar (that is, the first icon) of the service group A or a distance between the avatar of the service group A and the Email icon is less than a preset distance, to enable the email function.

Case 2: The target function is performed on a plurality of target contacts.

In a possible implementation, before the electronic device receives the second operation, the plurality of contacts in a selectable state may be displayed by the electronic device in response to the user operation.

In an example, the user may touch the response area corresponding to the second contact for the fifth preset duration, so that the plurality of contacts are displayed as a selectable state by the electronic device, where the first contact and the second contact may be the same or different. In another example, the user may touch a blank area in the first interface for the fifth preset duration, so that the plurality of contacts are displayed as a selectable state by the electronic device. For details, refer to the following examples 1 to 3.

In this application, the plurality of target contacts may be formed by a plurality of single contacts, or may be formed by a plurality of contact groups, or may be formed by one or more single contacts and one or more contact groups. An example in which a plurality of target contacts are formed by a plurality of single contacts may be used for description.

Example 1: The user touches the response area corresponding to the second contact for fifth preset duration, so that the plurality of contacts are displayed as a selectable state by the electronic device, where the first contact and the second contact are the same.

The user touches, in the Messages interface, a response area corresponding to Zhang San (that is, the second contact) for the fifth preset duration. Correspondingly, the electronic device may display, in the Messages interface, that the plurality of contacts are in a selectable state. The user touches response areas corresponding to Li Si and Wang Wu respectively, and selects Zhang San, Li Si, and Wang Wu at the same time. Further, the user touches, in the Messages interface, a response area corresponding to Zhang San (that is, the first contact) for the first preset duration, and the electronic device displays an avatar (that is, the first icon) of Zhang San in the Messages interface. Then the user performs a first operation on the electronic device. Specifically, the user drags the avatar (that is, the first icon) of Zhang San in the Messages interface to overlap with the Email icon (that is, the second icon) or a distance between the avatar and the Email icon (that is, the second icon) is less than a preset distance, to enable the email function. Operation objects of the email function are Zhang San, Li Si, and Wang Wu.

Example 2: The user touches the response area corresponding to the second contact for fifth preset duration, so that the plurality of contacts are displayed as a selectable state by the electronic device, where the first contact and the second contact are different.

The user touches, in the Messages interface, a response area corresponding to Zhang San (that is, the second contact) for the fifth preset duration. Correspondingly, the electronic device may display, in the Messages interface, that the plurality of contacts are in a selectable state. The user touches response areas corresponding to Li Si and Wang Wu respectively, and selects Zhang San, Li Si, and Wang Wu at the same time. Further, the user touches a response area corresponding to Li Si (that is, the first contact) in the Messages interface for the first preset duration, and the electronic device displays an avatar (that is, the first icon) of Li Si in the Messages interface. Then the user performs a first operation on the electronic device. Specifically, the user drags the avatar (that is, the first icon) of Li Si in the Messages interface to overlap with the Email icon (that is, the second icon) or a distance between the avatar and the Email icon (that is, the second icon) is less than a preset distance, to enable the email function. Operation objects of the email function are Zhang San, Li Si, and Wang Wu.

Example 3: The user touches a blank area in the first interface for fifth preset duration, so that the plurality of contacts are displayed as a selectable state by the electronic device.

The user touches the blank area in the Messages interface for the fifth preset duration. Correspondingly, the electronic device may display, in the Messages interface, that the plurality of contacts are in a selectable state. The user touches response areas corresponding to Zhang San, Li Si, and Wang Wu respectively, so as to select Zhang San, Li Si, and Wang Wu at the same time. Further, the user touches a response area corresponding to Li Si (that is, the first contact) in the Messages interface for the first preset duration, and the electronic device displays an avatar (that is, the first icon) of Li Si in the Messages interface. Then the user performs a first operation on the electronic device. Specifically, the user drags the avatar (that is, the first icon) of Li Si in the Messages interface to overlap with the Email icon (that is, the second icon) or a distance between the avatar and the Email icon (that is, the second icon) is less than a preset distance, to enable the email function. Operation objects of the email function are Zhang San, Li Si, and Wang Wu.

In this application, the first interface and the second interface belong to a same application or different applications.

For example, both the first interface and the second interface belong to the application a, and the user touches the response area of the target contact in the first interface of the application a, to generate the first icon. The user drags the first icon to overlap with the second icon, or a distance between the first icon and the second icon is less than a preset distance. The electronic device jumps from the first interface to the second interface in the application a. After determining that the target function is performed on the target contact, the electronic device jumps from the second interface to the first interface in the application a.

For another example, the first interface belongs to the application a, the second interface belongs to an application b, and the application a and the application b are two different applications. The user touches the response area of the target contact in the first interface of the application a, to generate the first icon. The user drags the first icon to overlap with the second icon, or a distance between the first icon and the second icon is less than a preset distance. The electronic device enables the application b, and displays the second interface in the application b. After determining that the target function is performed on the target contact, the electronic device jumps back from the application b to the application a, and the application a displays the first interface.

In the foregoing technical solution, a user may drag a first icon and a second icon in a display interface of an electronic device until a position relationship between the first icon and the second icon meets a preset condition, that is, the first icon and the second icon are superimposed in the display interface, to implement a target function for a target contact. The user does not need to tap a button in the interface for a plurality of times, and the user does not need to switch between different interfaces for a plurality of times, which helps reduce user operations. In addition, in this application, a visual element and an information architecture on an application interface are not changed, which helps reduce development costs.

When hardware is used for implementation, for hardware implementation of the electronic device, refer to FIG. 12 and related descriptions thereof.

Referring to FIG. 12, the electronic device includes: a touchscreen 1201, where the touchscreen 1201 includes a touch panel 1207 and a display 1208; one or more processors 1202; a memory 1203; one or more applications (not shown); and one or more computer programs 1204, and a sensor 1205. The foregoing components may be connected by using one or more communication buses 1206. The one or more computer programs 1204 are stored in the memory 1203 and are configured to be executed by the one or more processors 1202. The one or more computer programs 1204 include instructions, and the instructions may be used to perform the method in any one of the foregoing embodiments.

An embodiment of this application further provides a computer-readable storage medium. The computer-readable storage medium stores a computer program, the computer program includes program instructions, and when the program instructions are executed by a computer, the computer is enabled to perform the method in the foregoing embodiment.

An embodiment of this application further provides a computer program product. The computer program product stores a computer program, the computer program includes program instructions, and when the program instructions are executed by a computer, the computer is enabled to perform the method in the foregoing embodiment.

An embodiment of this application further provides a chip system, including one or more processors. When the one or more processors execute program instructions, the one or more processors perform the method in the foregoing embodiment.

In addition, an embodiment of this application further provides an apparatus. The apparatus may be specifically a chip, a component, or a module. The apparatus may include a processor and a memory that are connected to each other. The memory is configured to store computer program instructions. When the apparatus runs, the processor may execute the computer program instructions stored in the memory, so that the chip performs the methods in the foregoing method embodiments.

The electronic device, the computer storage medium, the computer program product, or the chip provided in embodiments of this application may be configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for enabling a function in an application, comprising:
receiving a first operation, wherein the first operation is that a user drags a first icon and/or a second icon in a first interface until a position relationship between the first icon and the second icon meets a preset condition; and
displaying, in response to the first operation, a second interface corresponding to a target function indicated by the second icon, wherein a first contact corresponding to the first icon is an operation object of the target function.

2. The method according to claim 1, wherein the first icon comprises a plurality of icons.

3. The method according to claim 1 or 2, wherein that a position relationship between the first icon and the second icon meets a preset condition comprises:
the first icon and the second icon overlap, or a distance between the first icon and the second icon is less than a preset distance.

4. The method according to any one of claims 1 to 3, wherein before the receiving a first operation, the method further comprises:
receiving a second operation, wherein the second operation is that the user touches a first response area corresponding to the first contact in the first interface for first preset duration; and
generating, in response to the second operation, the first icon in a touch position of the second operation.

5. The method according to claim 4, wherein after the receiving a second operation, the method further comprises:
highlighting a plurality of selectable function icons, wherein the plurality of selectable function icons comprise the second icon.

6. The method according to any one of claims 1 to 5, wherein the second icon comprises any one of a Contacts icon, a Phone icon, an Email icon, a Messages icon, and a Blog icon.

7. The method according to any one of claims 1 to 6, wherein the first contact is a contact group, and the contact group comprises a plurality of contacts.

8. The method according to any one of claims 1 to 7, wherein the method further comprises:
returning to the first interface from the second interface after the target function is executed on the first contact.

9. An electronic device, comprising a processor, a memory, and a touchscreen, wherein the memory and the touchscreen are coupled to the processor, the memory is configured to store computer program code, the computer program code comprises computer instructions, and when the processor reads the computer instructions from the memory, the electronic device is enabled to perform the following operations:
receiving a first operation, wherein the first operation is that a user drags a first icon and/or a second icon in a first interface until a position relationship between the first icon and the second icon meets a preset condition; and
displaying, in response to the first operation, a second interface corresponding to a target function indicated by the second icon, wherein a first contact corresponding to the first icon is an operation object of the target function.

10. The electronic device according to claim 9, wherein the first icon comprises a plurality of icons.

11. The electronic device according to claim 9 or 10, wherein that a position relationship between the first icon and the second icon meets a preset condition comprises:
the first icon and the second icon overlap, or a distance between the first icon and the second icon is less than a preset distance.

12. The electronic device according to any one of claims 9 to 11, wherein before receiving the first operation, the electronic device is further configured to:
receive a second operation, wherein the second operation is that the user touches a first response area corresponding to the first contact in the first interface for first preset duration; and
generate, in response to the second operation, the first icon in a touch position of the second operation.

13. The electronic device according to claim 12, wherein after receiving the second operation, the electronic device is further configured to:
highlight a plurality of selectable function icons, wherein the plurality of selectable function icons comprise the second icon.

14. The electronic device according to any one of claims 9 to 13, wherein the second icon comprises any one of a Contacts icon, a Phone icon, an Email icon, a Messages icon, and a Blog icon.

15. The electronic device according to any one of claims 9 to 14, wherein the first contact is a contact group, and the contact group comprises a plurality of contacts.

16. The electronic device according to any one of claims 9 to 15, wherein after executing the target function on the first contact, the electronic device is further configured to:
return to the first interface from the second interface.

17. A computer-readable storage medium, wherein the computer-readable storage medium stores a computer program, the computer program comprises program instructions, and when the program instructions are executed by a computer, the computer is enabled to perform the method according to any one of claims 1 to 8.

18. A computer program product, wherein the computer program product stores a computer program, the computer program comprises program instructions, and when the program instructions are executed by a computer, the computer is enabled to perform the method according to any one of claims 1 to 8.

19. A chip system, comprising one or more processors, wherein when the one or more processors execute instructions, the one or more processors perform the method according to any one of claims 1 to 8.
